# EUROPÄISCHE PATENTSCHRIFT

(11) **EP 3 981 718 B1**
(45) Veröffentlichungstag und Bekanntmachung des Hinweises auf die Patenterteilung: **13.03.2024**
(21) Anmeldenummer: 21198278.0
(22) Anmeldetag: 22.09.2021
(51) Int. Cl.: B65G 67/08, B65G 67/04, B65G 57/03, B65G 47/90

(54) **VERFAHREN UND VORRICHTUNG ZUM BELADEN VON BEHAELTERN MIT PACKSTUECKEN**
METHOD AND DEVICE FOR LOADING CONTAINERS WITH PACKAGES
PROCÉDÉ ET DISPOSITIF DE CHARGEMENT DE RÉCIPIENTS COMPORTANT DES COLIS

(30) Priorität: 08.10.2020 DE 102020126448
(43) Veröffentlichungstag der Anmeldung: 13.04.2022
(73) Patentinhaber: Deutsche Post AG, 53113 Bonn (DE)
(72) Erfinder: HARTMANN, Bernd, 53501 Grafschaft-Leimersdorf (DE); GRAFE, Dr. Wolfram, 18107 Elmenhorst (DE)
(74) Vertreter: Cohausz & Florack

(56) Entgegenhaltungen:
- EP-A1- 2 241 403
- WO-A1-2014/088415
- CN-A- 107 117 470

## Beschreibung

Die Erfindung betrifft ein Verfahren zum Beladen eines Behälters, insbesondere Kofferaufbau, Wechselbehälter oder Rollbehälter, mit Packstücken. Ferner betrifft die Erfindung eine Vorrichtung zum Beladen eines Behälters, insbesondere Kofferaufbau, Wechselbehälter oder Rollbehälter mit Packstücken nach einem solchen Verfahren.

Es sind bereits unterschiedliche Verfahren zum Beladen von Behältern mit Packstücken bekannt. Bei diesen Behältern kann es sich um Aufbauten von Nutzfahrzeugen handeln, die beispielsweise als Kofferaufbauten bezeichnet werden. Unter sogenannten Wechselbehältern werden Aufbauten von Nutzfahrzeugen verstanden, die entweder von einem Chassis eines Nutzfahrzeugs getragen werden oder auf Beinen auf dem Untergrund aufstehen. Im letztgenannten Fall, kann das Chassis des Nutzfahrzeugs unter dem Wechselbehälter herausgefahren und die Wechselbehälter an Ort und Stelle zurückgelassen werden. Unter Nutzfahrzeugen werden dabei insbesondere solche Fahrzeuge verstanden, die für den Transport von Packstücken über den öffentlichen Straßenverkehr vorgesehen sind. Zudem kommen aber auch Behälter in Frage, die überwiegend auf Werksgeländen, in Hallen und dergleichen verwendet werden. Solche Behälter können fest mit Rollen versehen sein und werden daher auch oft als Rollbehälter bezeichnet. Rollbehälter werden beispielsweise mit Packstücken beladen und anschließend selbst in Nutzfahrzeugaufbauten verladen.

In den Behältern werden die Packstücke in der Regel mehr oder weniger gestapelt, damit das Volumen der Behälter besser ausgenutzt werden kann. Trotzdem können die Stapel oft recht unregelmäßig sein, damit das Beladen der Behälter nicht zu viel Zeit in Anspruch nimmt. Hinzu kommt, dass die Packstücke oft keine einheitlichen, sondern sehr unterschiedliche Abmessungen aufweisen können, was das Stapeln der Packstücke nur mit Einschränkungen erlaubt. Obwohl die Packstücke oft recht unterschiedliche Abmessungen aufweisen können, werden die Behälter zum Ausnutzen des zur Verfügung stehenden Volumens der Behälter möglichst bis unter das Dach der Behälter beladen, sofern diese ein Dach aufweisen.

Wenn in kurzer Zeit mehrere Behälter mit Packstücken beladen werden sollen, etwa weil die Packstücke in kurzer Zeit sortiert und weiterverteilt werden müssen, ist ein effektives und effizientes Beladen der Behälter mit Packstücken wünschenswert. Hierzu sind schon unterschiedliche Verfahren vorgeschlagen worden, die sich unterschiedlicher Hilfsmittel wie Teleskopbandförderer bedienen. In den meisten Fällen erfolgt das Beladen der Behälter mit Packstücken durch Personen, die die Packstücke von einem Hilfsmittel wie einem Teleskopbandförderer übernehmen und sodann in den Behälter stapeln, wobei das Stapeln typischerweise von vorne nach hinten erfolgt und von den Größen der zu stapelnden Behälter abhängt. Meist sind die Packstücke zudem in einem vorgeschalteten Verfahren sortiert worden, so dass die Packstücke in vielen Fällen sehr unterschiedliche Größen und Gewichte habenkönnen, wobei sich die Abfolge der zu verladenden Packstücke meist zufällig ergibt. All diese Verfahren sind jedoch recht aufwendig und hinsichtlich der Kosten noch nicht zufriedenstellend.

Das Dokument WO 2014/088415 A1 offenbart ein Verfahren zum Beladen eines Behälters mit Packstücken, mit einer eine Führung umfassenden Führungseinrichtung, wobei an der Führungseinrichtung ein in Längsrichtung der Führung verschiebbarer Manipulator-Kopf vorgesehen ist. Das Verfahren sieht vor, dass
- der Manipulator-Kopf nacheinander Packstücke übernimmt,
- der Manipulator-Kopf die übernommenen Packstücke nacheinander in Form eines Stapels von Packstücken in den Behälter ablegt und
- der Manipulator-Kopf wenigstens zwischen dem Ablegen zweier aufeinanderfolgender Packstücke entlang der wenigstens einen Führung verschoben wird.

Daher liegt der vorliegenden Erfindung die Aufgabe zugrunde, das eingangs genannte und zuvor näher beschriebene Verfahren derart auszugestalten und weiterzubilden, dass das Beladen der Behälter mit Packstücken effektiver und effizienter erfolgen kann.

Diese Aufgabe wird durch das Verfahren zum Beladen eines Behälters mit Packstücken des Anspruchs 1 gelöst.

Zudem wird die genannte Aufgabe durch eine Vorrichtung zum Beladen eines Behälters mit Packstücken nach Anspruch 14 gelöst.

Das Beladen des Behälters mit den Packstücken erfolgt erfindungsgemäß mit wenigstens zwei Handelementen, die eine Reihe von Fingerelementen umfassen und so das händische Beladen der Packstücke durch eine Person entbehrlich machen kann. Des Weiteren macht sich die Erfindung den sogenannten Fin Ray Effekt zu Nutze, um die bedarfsweise sehr unterschiedliche Abmessungen aufweisenden Packstücke zielgerichtet und ohne Beschädigung in den Behälter laden zu können.

Die Fingerelemente der Handelemente weisen jeweils wenigstens zwei sich gemeinsam von einem Ende des Fingerelements zum gegenüberliegenden Ende des Fingerelements erstreckende flexible Flankenelemente auf. Hierbei bietet es sich insbesondere an, wenn die Flankenelemente die Oberseite und die Unterseite jedes Fingerelements bilden, so dass die Packstücke stets von einem Flankenelement ergriffen werden. Zwingend erforderlich ist dies jedoch nicht. Die flexiblen Flankenelemente jedes Fingerelements sind jedoch über eine Mehrzahl von Stegen jeweils flexibel miteinander verbunden, so dass die Fingerelemente die nötige Flexibilität erhalten, um von wenigstens einer gekrümmten Stellung in wenigstens eine gestreckte Stellung und zurück verstellt werden zu können. Dabei ist es besonders zweckmäßig, wenn die Fingerelemente stufenlos gekrümmt und wieder gestreckt werden können. Dann können die Fingerelemente unterschiedliche gekrümmte Stellungen einnehmen, und zwar jeweils gerade so, wie es für das Ergreifen und Beladen eines bestimmten Packstücks geeignet ist.

Da die Packstücke in dem Behälter mehr oder weniger gleichmäßig gestapelt werden sollen sind die Handelemente verschiebbar an einer Führung einer Führungseinrichtung gehalten, wobei die Führungseinrichtung zum Einladen der Packstücke in den Behälter bedarfsweise wenigstens teilweise in den Behälter eingefahren wird. Sodann kann mit den Handelementen wenigstens ein Packstück oder eine Mehrzahl von Packstücken gleichzeitig in den Behälter gestapelt werden. Damit die Breite des Laderaums des Behälters effektiv ausgenutzt werden kann, wird das Handelement nach dem Ablegen wenigstens eines Packstücks im Behälter entlang oder mittels der wenigstens einen Führung verschoben, um an anderer Stelle, insbesondere angrenzend, wenigstens ein weiteres Packstück ablegen zu können. So können auch breite Behälter zweckmäßig mit Packstücken beladen werden. Dabei kann es konstruktiv oder hinsichtlich der Handhabung zu einer Vereinfachung führen, wenn die Handelemente in Längsrichtung der Führung verschiebbar ausgebildet sind. Zwingend erforderlich ist dies jedoch je nach der Ausgestaltung der Führung und der Führungseinrichtung nicht.

Die zum Beladen des Behälters vorgesehenen Packstücke können von einer Fördereinrichtung an die Handelemente herantransportiert werden, so dass die herantransportierten Packstücke nur noch von den Handelementen übernommen werden müssen. Die in den Behälter zu ladenden Packstücke werden dabei nacheinander übernommen, also nicht zeitgleich. Dies bedeutet aber nicht, dass nicht auch zwei oder mehr Packstücke gemeinsam von den Handelementen übernommen werden. Danach werden dann aber weitere Packstücke übernommen und zwar wieder bedarfsweise einzeln oder in Gruppen.

Um die Effektivität des Beladens des Behälters mit Packstücken zu erhöhen, kann sich die Fördereinrichtung bis in den Behälter hinein erstrecken und so die Packstücke bis an die in dem Behälter befindlichen Handelemente herantransportieren. Wenn der Behälter zunehmend mit Packstücken beladen ist, kann es zweckmäßig sein, wenn die Fördereinrichtung und/oder die Führungseinrichtung weniger weit in den Behälter hineinreicht, da der Behälter dann bereits in Teilen beladen ist. Das entsprechende Zurückziehen der Fördereinrichtung und/oder der Führungseinrichtung kann dabei schrittweise erfolgen. Wenn der Behälter vollständig mit Packstücken beladen ist, ist es zweckmäßig, wenn die Führungseinrichtung und die Fördereinrichtung gänzlich aus dem Laderaum des Behälters entfernt sind, so dass der Laderaum möglichst vollständig zur Aufnahme von Packstücken genutzt werden kann.

Vorliegend wird unter einem Stapel eine Vielzahl von wenigstens unregelmäßig aufeinander und nebeneinander angeordneten Packstücken verstanden. Es handelt sich jedoch auch nicht um einen Haufen, bei dem die Packstücke wahllos aufeinander geworfen sind und die Form eines Kegels bilden. Bedarfsweise kann der Stapel von Packstücken abschnittsweise aber auch haufenartige Abschnitte aufweisen.

Der sogenannte Fin Ray Effekt kann bei den Schwanzflossen von Knochenfischen beobachtet werden. Drückt man mit dem Finger seitlich gegen sie, krümmen sich die Flossen nicht weg, sondern biegen sich dem Finger entgegen. Möglich wird dies durch einen speziellen Aufbau der Flossen. Dieser ist bei den Fingerelementen des wenigstens einen Handelements entsprechend nachgebildet.

Die nötige Flexibilität der Fingerelemente kann beispielsweise durch elastische Flankenelemente oder durch eine Gliederkette aus schwenkbar oder gelenkig miteinander verbundenen starren Kettengliedern bereitgestellt werden. Dabei wird eine entsprechende Flexibilität lediglich in eine Raumrichtung gefordert. In den Raumrichtungen senkrecht dazu ist eine Flexibilität nicht zwingend erforderlich. Trotzdem wäre auch eine Flexibilität in zwei zueinander senkrecht stehenden Raumrichtungen denkbar und bedarfsweise auch bevorzugt. Die entsprechende Flexibilität der Flankenelemente erlaubt letztlich eine Krümmung des Fingerelements ausgehend von einer gestreckten Stellung in eine gekrümmte Stellung beispielsweise ähnlich der Krümmung eines Fingers.

Damit die Krümmung des Fingerelements in eine Richtung beispielsweise durch einen Druck gegen das Fingerelement, insbesondere gegen ein Flankenelement, in die entgegengesetzte Richtung ausgelöst werden kann, sind die wenigstens zwei Flankenelemente zwischen den beiden Enden des Fingerelements über eine Mehrzahl von Stegen jeweils flexibel miteinander verbunden. Dabei können die Stege starr ausgebildet und schwenkbar oder gelenkig mit den Flankenelementen verbunden sein. Es können aber, bedarfsweise alternativ zu schwenkbaren oder gelenkigen Verbindungen zu den wenigstens zwei Flankenelementen, auch flexible, insbesondere elastische Stege verwendet werden. Auf diese Weise wird erreicht, dass sich die Stege gegenüber den wenigstens zwei Flankenelementen schwenken können, um so eine Krümmung des Fingerelements von einer gestreckten Stellung in eine gekrümmte Stellung und zurück zu ermöglichen.

Unter einer gestreckten Stellung des Fingerelements kann eine maximal gestreckte und/oder längliche Ausrichtung des Fingerelements verstanden werden. Es kann sich aber auch um eine Stellung handeln, aus der das Fingerelement durch ein weiteres Krümmen in eine gegenüber der gestreckten Stellung weiter gekrümmte Stellung werden kann. Dementsprechend muss auch die gekrümmte Stellung keine maximal gekrümmte Stellung sein. Die Begriffe gestreckte Stellung und gekrümmte Stellung können also bedarfsweise lediglich relativ, also als relative Positionen zueinander, verstanden werden. Des Weiteren ist zu berücksichtigen, dass die Fingerelemente aus einer gestreckten Stellung in entgegengesetzte Richtung in unterschiedliche gekrümmte Stellungen verstellt werden können.

Das Fingerelement ermöglicht aufgrund des entsprechenden Aufbaus letztlich eine Anpassung der Form an die Form der zu transportierenden Packstücke, wenn die Fingerelemente gegen das Packstück drücken bzw. umgekehrt. Damit kann einerseits eine größere Anlagefläche von Fingerelement und Packstück bereitgestellt werden, was das Handling des Packstücks verbessert. Zudem kann die Flächenpressung zwischen Fingerelement und Packstück herabgesetzt werden, was ein beschädigungsfreies Packstückhandling begünstigt.

Der Aufbau des Fingerelements erlaubt aber auch bedarfsweise eine Vorkrümmung einzustellen, auch ohne dass ein Kontakt zwischen dem Fingerelement und dem wenigstens einen Packstück besteht. Dazu können beispielsweise die Flankenelemente in Längsrichtung des Fingerelements gegeneinander verstellt werden. Dabei krümmt sich das Fingerelement dann von dem Flankenelement weg, das gegenüber dem wenigstens einen weiteren Flankenelement weiter in Längsrichtung zum gegenüberliegenden Ende des Fingerelements verstellt ist.

Um das Fingerelement beispielsweise nicht nur in einer Ebene verstellen zu können, kann das Fingerelement beispielsweise auch drei oder mehr Flankenelemente aufweisen, die untereinander über Stege miteinander verbunden sind. Dabei können die Stege beispielsweise kreuzförmig, sternförmig, rechteckig, quadratisch, oval oder rund ausgebildet sein, um einfach an allen Flankenelementen festgelegt werden zu können. Die entsprechenden Verbindungen sind dabei vorzugsweise entweder schwenkbar oder drehbare ausgebildet und/oder es sind die Stege flexibel ausgebildet.

Da mehrere Fingerelemente zu einem Handelement zusammengefasst werden, wird das Beladen noch effizienter und effektiver möglich als mit einzelnen Fingern. Die Packstücke können nämlich viel besser und schonender ergriffen und verladen werden, um so einen platzsparenden Stapel von Packstücken zu erzeugen, durch den der Laderaum des Behälters möglichst umfassend ausgenutzt werden kann. Dabei kann das Handelement die zu beladenden Packstücke wenigstens teilweise umgreifen, indem sich die Fingerelemente infolge des Fin Ray Effekts teilweise um die angrenzenden Packstücke herumlegen. Jetzt kann durch eine einfache Bewegung des Handelements das wenigstens eine Packstück in geeigneter Weise und an geeigneter Stelle auf den Stapel von Packstücken gelegt werden. Dabei kann wenigstens ein Fingerelement des Handelements bedarfsweise gekrümmt werden, bevor das Fingerelement mit den zu ergreifenden Packstücken in Kontakt kommt. Die entsprechende Krümmung wird durch eine entsprechende Verstellung der Flankenelemente des Fingerelements in ihrer Längsrichtung bewirkt, was zwangsweise zu einer zunehmenden oder einer abnehmenden Krümmung des Fingerelements führt, je nachdem in welche Richtung die Flankenelemente des Fingerelements gegeneinander verstellt werden. Die Fingerelemente können dann infolge des Kontakts mit den zu verladenden Packstücken weiter gekrümmt werden oder es können die zu verladenden Packstücke durch die vorgekrümmten Finger ohne eine weitere Krümmung ergriffen und auf dem Stapel von Packstücken abgelegt werden. Eine Krümmung wenigstens eines Fingerelements, bevor das Fingerelement mit den zu verladenden Packstücken in Kontakt kommt, ist jedoch nicht zwingend erforderlich zur Durchführung des vorliegend beschriebenen Verfahrens.

Unter Packstücken wird bedarfsweise eine besondere Art von Packstücken verstanden. Packstücke können dann mit Packungen verpackte Waren sein. Packstücke können mithin wenigstens eine Umverpackung aus Papier, Pappe, Gewebe oder Kunststoff aufweisen und beispielsweise als Pakete, Kisten und Behälter sowie als nicht formstabile Gebinde wie Tüten oder Säcke vorliegen.

Der besseren Verständlichkeit halber und zur Vermeidung von unnötigen Wiederholungen werden nachfolgend das Verfahren und die Vorrichtung zur Durchführung des Verfahrens gemeinsam beschrieben, ohne jeweils im Einzelnen zwischen dem Verfahren und der Vorrichtung zu unterscheiden. Für den Fachmann ergibt sich aber dennoch anhand des Kontextes, welches Merkmal jeweils hinsichtlich des Verfahrens und der Vorrichtung besonders bevorzugt ist.

Bei einer ersten besonders bevorzugten Ausgestaltung der Vorrichtung ist die wenigstens eine Führung in Form einer Schiene und die Führungseinrichtung als eine die wenigstens eine Schiene umfassende Schieneneinrichtung ausgebildet. Dann können die Handelemente in konstruktiv einfacher Weise zweckmäßig und zuverlässig verschoben werden, und zwar der Einfachheit halber in Längsrichtung der wenigstens einen Schiene. Alternativ könnte das wenigstens eine Handelement aber beispielsweise auch mittels einer Führung umfassend wenigstens eine Rolle verschoben werden, wobei dann die Führungseinrichtung wenigstens eine Lauffläche umfassen kann, auf der die wenigstens eine Rolle beim Verschieben des wenigstens einen Handelements abrollen kann. Grundsätzlich sind also alle Arten von Führungen und Führungseinrichtungen denkbar, die das Verschieben der Handelemente in definierter Weise ermöglichen. Die Führungen können hierbei linear und kurvolinear ausgeführt werden. Eine gewünschte Führung kann beispielsweise auch durch Koppelgelenkgetriebe oder Kulissen erreicht werden. Bei einer ersten besonders bevorzugten Ausgestaltung des Verfahrens bietet es sich an, wenn die Handelemente und/oder wenigstens ein Fingerelement über eine Antriebseinheit zum Verstellen der wenigstens zwei Flankenelemente in einer Längsrichtung des Fingerelements gegeneinander angetrieben wird. Dann verstellen sich wenigstens die Flankenelemente wenigstens eines Fingerelements so, dass das entsprechende Fingerelemente gezielt von einer eher gekrümmten in eine eher gestreckte Stellung und/oder zurück verstellt werden kann. Dadurch kann das wenigstens eine Fingerelement des jeweiligen Handelements zielgerichtet verstellt werden. Die Verstellung erfolgt dann vorzugsweise in einer Art und Weise, die ein zweckmäßiges Ergreifen von Packstücken und Beladen von Behältern mit Packstücken erwarten lässt.

Alternativ oder zusätzlich kann das von einem Handelement übernommene Packstück aber auch so entgegengesetzt zu in einer Greifrichtung des Handelements gegen das Handelement drücken, dass wenigstens ein Flankenelement wenigstens eines Fingerelements partiell eingedrückt wird. Das partielle Eindrücken des Flankenelements bewirkt ein Verstellen des entsprechenden Fingerelements von einer eher gestreckten in eine eher gekrümmte Stellung. Die Fingerelemente erlauben auf diese Weise ein zuverlässiges und zugleich schonendes Übernehmen der Packstücke. Die Packstücke können somit zweckmäßig von einer Fördereinrichtung übernommen und beispielsweise durch ein Öffnen und/oder Drehen des Handelements in dem Behälter abgelegt werden. Das Öffnen des Handelements geht dabei bevorzugt mit einem Spreizen der Fingerelemente des Handelements einher. Das Handelement kann mithin effektiv nach Art einer menschlichen Hand beim Beladen des Behälters mit Packstücken bewegt werden.

Um zu vermeiden, dass die Packstücke trotz der Fingerelemente beschädigt werden, kann es sich anbieten, wenn die Handelemente und/oder wenigstens eine Fingerelement mit wenigstens einem Drucksensor versehen wird. Dann kann der beim Übernehmen oder Ergreifen von Packstücken durch die Krümmung der Fingerelemente auf die Packstücke ausgeübte Druck erfasst und beispielsweise das Erzeugen überhöhter Kräfte verhindert werden, wenn ein vorgegebener Druck erreicht oder überschritten wird. In diesem Zusammenhang bietet es sich insbesondere an, wenn der wenigstens eine Drucksensor wenigstens einem Flankenelement zugeordnet wird, um den auf das Flankenelement ausgeübten Druck zu erfassen. Durch den wenigstens einen Drucksensor kann alternativ oder zusätzlich auch auf das Gewicht und/oder die Größe des von dem wenigstens einen Handelement übernommen Packstück geschlossen werden. Bedarfsweise kann das Packstück dann je nach der Größe und/oder des Gewichts an einer geeigneten Stelle im Behälter abgelegt werden, um andere Packstücke im Behälter nicht zu beschädigen. Es kann sich also anbieten, wenn größere und/oder schwerere Packstücke nach unten und/oder in Mitte des Laderaums des Behälters gelegt werden, während beispielsweise kleinere und/oder leichtere Packstücke nach oben und/oder an die Seite des Laderaums des Behälters gelegt werden.

Damit das Beladen des Behälters mit Packstücken beschleunigt und damit effektiver gestaltet werden kann, können die Packstücke durch die Handelemente von einer Fördereinrichtung übernommen werden. Die Fördereinrichtung transportiert die Packstücke dann an die Handelemente heran, das die Packstücke dann nur noch übernehmen und in dem Behälter ablegen muss. Besonders einfach und zweckmäßig kann dies erreicht werden, wenn als Fördereinrichtung eine Bandfördereinrichtung verwendet wird. Bei einem Teleskopbandförderer kann dieser schrittweise eingefahren werden, und zwar in Abhängigkeit der Beladung des Behälters mit Packstücken, die den Laderaum dabei zunehmend ausfüllen.

Alternativ oder zusätzlich bietet es sich für ein platzsparendes und rasches Beladen des Behälters an, wenn die Packstücke von den Handelementen wenigstens im Wesentlichen in Lagen übereinander im Behälter abgelegt werden. Dies ist insbesondere dann zweckmäßig, wenn die Packstücke nacheinander in Lagen übereinander abgelegt werden. Auf diese Weise können einfach recht dicht gepackte Stapel aus Packstücken erzeugt werden.

Um ein effektives und zugleich platzsparendes Beladen des Behälters sicherzustellen, kann es sich anbieten, wenn der Laderaum des mit Packstücken zu beladenden Behälters, die Lage des Stapels aus von den Handelementen bereits abgelegten Packstücken, die Kontur des Stapels aus von dem wenigstens einen Handelement bereits abgelegten Packstücken und/oder die Kontur der Stirnseite des Stapels aus von den Handelementen bereits abgelegten Packstücken wenigstens teilweise von einem Sensor erfasst werden.

Das Beladen kann auf diese Weise sehr zweckmäßig an den jeweiligen Laderaum des jeweiligen Behälters und/oder an das fortschreitende Beladen des Laderaums mit den Packstücken angepasst werden. Beispielsweise kann so wenigstens teilweise gesteuert werden, wo die Handelemente die nachfolgenden Packstücke zweckmäßigerweise ablegen und/oder wie ein Handelement, die wenigstens eine Führungseinrichtung und/oder die Fördereinrichtung verstellt wird, um ein unterbrechungsfreies und/oder störungsfreies Beladen des Behälters sicherzustellen. Dabei ist es der Einfachheit und Genauigkeit halber besonders bevorzugt, wenn der wenigstens eine Sensor wenigstens ein optischer Sensor, insbesondere einer Kamera, ist.

Ein effektives und zugleich platzsparendes Beladen des Behälter kann alternativ oder zusätzlich auch dann erreicht werden, wenn die Handelemente abhängig von dem Laderaum, von der Höhe des Stapels von Packstücken, von der Lage des Stapels von Packstücken, von der Kontur des Stapels von Packstücken und/oder von der Kontur der Stirnseite des Stapels von Packstücken verschoben werden.

Dies bietet sich der Einfachheit und Zuverlässigkeit halber insbesondere dann an, wenn die Handelemente längs der wenigstens einen Führung verschoben werden.

Grundsätzlich kann aber auch die Führungseinrichtung und/oder die wenigstens eine Führung abhängig von dem Laderaum, von der Höhe des Stapels von Packstücken, von der Lage des Stapels von Packstücken, von der Kontur des Stapels von Packstücken und/oder von der Kontur der Stirnseite des Stapels von Packstücken weiter in den Behälter hineingefahren und/oder in die Gegenrichtung zurückgefahren werden. Das Beladen mit den Handelementen folgt dann bevorzugt angepasst an das zunehmende Beladen des Laderaums des Behälters.

Das Stapeln der Packstücke in Lagen wie auch das Beladen des Behälters insgesamt kann vereinfacht und beschleunigt werden, wenn die Handelemente und/oder die wenigstens eine Führung der Führungseinrichtung vor und/oder zurück verstellt werden.

In diesem Zusammenhang bezieht sich die Angabe vor und/oder zurück auf die Richtung der Beladung, die allgemein gesprochen von einem vorderen Ende zu einem hinteren Ende erfolgt. Wird der Behälter über eine hintere Öffnung des Behälters mit Packstücken beladen und das wenigstens eine Handelement und/oder die wenigstens eine Führung vor verstellt, entspricht dies einem Verstellen nach vorne bzw. in Fahrtrichtung in Bezug auf den Behälter. Wird der Behälter von der Seite beladen, stellt das Verstellen des wenigstens einen Handelements und/oder der wenigstens einen Führung vor und zurück ein Verstellen quer zur Fahrtrichtung des Behälters dar. Ein Beladen des Behälters entgegen der Fahrtrichtung, also von hinten nach vorne, wäre eher ungewöhnlich, hätte aber zur Folge, dass das Verstellen des wenigstens einen Handelements und/oder der wenigstens einen Führung vor bezogen auf die Beladerichtung einer Verstellung nach hinten in Bezug auf die Fahrtrichtung des Behälters entspräche. Ein zielgerichtetes und damit effektives Verstellen des wenigstens einen Handelements und/oder der wenigstens einen Führung vor und/oder zurück kann erfolgen, wenn das wenigstens eine Handelement und/oder die wenigstens eine Führung abhängig von dem Laderaum, von der Höhe des Stapels von Packstücken, von der Lage des Stapels von Packstücken, von der Kontur des Stapels von Packstücken und/oder von der Kontur der Stirnseite des Stapels von Packstücken vor und/oder zurück verstellt wird.

Das Stapeln der Packstücke in Lagen wie auch das Beladen des Behälters insgesamt kann alternativ oder zusätzlich auch dadurch vereinfacht und beschleunigt werden, dass das wenigstens eine Handelement und/oder die wenigstens eine Führung der Führungseinrichtung nach links und/oder nach rechts verstellt wird. In diesem Zusammenhang bezeichnet die Angabe links und/oder rechts ein Verstellen seitlich zur Beladerichtung. Wird der Behälter über eine hintere Öffnung des Behälters mit Packstücken von der Vorderseite des Behälters zur Rückseite des Behälters hin beladen und die Handelemente und/oder die wenigstens eine Führung nach links oder rechts verstellt, entspricht dies einem Verstellen zur Seite sowohl in Bezug auf die Beladerichtung als auch in Bezug auf die Fahrtrichtung des Behälters. Wird der Behälter von der Seite beladen, stellt das Verstellen der Handelemente und/oder der wenigstens einen Führung nach links oder rechts ein Verstellen wenigstens im Wesentlichen parallel zur Fahrtrichtung des Behälters dar. Ein Beladen des Behälters entgegen der Fahrtrichtung, also von hinten nach vorne, wäre eher ungewöhnlich, hätte aber zur Folge, dass das Verstellen der Handelemente und/oder der wenigstens einen Führung nach links oder rechts einem Verstellen quer zur Beladerichtung ebenso wie zur Fahrtrichtung des Behälters entspräche. Ein zielgerichtetes und damit effektives Verstellen der Handelemente und/oder der wenigstens einen Führung nach links und/oder nach rechts kann erfolgen, wenn die Handelemente und/oder die wenigstens eine Führung abhängig von dem Laderaum, von der Höhe des Stapels von Packstücken, von der Lage des Stapels von Packstücken, von der Kontur des Stapels von Packstücken und/oder von der Kontur der Stirnseite des Stapels von Packstücken nach links und/oder nach rechts verstellt wird.

Das Beladen lässt sich grundsätzlich zweckmäßig und schnell durchführen, wenn die Handelemente und/oder die wenigstens eine Führung der Führungseinrichtung während dem Beladen des Behälters bzw. zwischen dem Ablegen aufeinanderfolgender Packstücke nach oben und/oder nach unten verstellt wird. So können die Packstücke in einer Höhe auf den Stapel gelegt werden, die wenigstens im Wesentlichen der jeweils aktuellen Höhe des entsprechenden Stapels entspricht, wodurch sich einfach Stapel aus Packstücken im Behälter bilden lassen. In diesem Zusammenhang bietet es sich besonders an, wenn die Handelemente und/oder die wenigstens eine Führung abhängig von dem Laderaum, von der Höhe des Stapels von Packstücken, von der Lage des Stapels von Packstücken, von der Kontur des Stapels von Packstücken und/oder von der Kontur der Stirnseite des Stapels von Packstücken nach oben und/oder nach unten verstellt werden.

Um ein allmähliches Beladen des Behälters beispielsweise von vorne nach hinten durch eine hintere Öffnung des Behälters zu vereinfachen, kann die wenigstens eine Führungseinrichtung, die wenigstens eine Führung und/oder ein Handelement zum Ablegen weiterer Packstücke, insbesondere zum Ablegen wenigstens einer weiteren Lage von Packstücken in den Behälter hineingefahren, weiter in den Behälter hineingefahren, weiter in Richtung einer Stellung außerhalb des Behälters verfahren und/oder aus dem Behälter herausgefahren werden. Der weiteren Vereinfachung des Beladens des Behälters kann es dabei dienlich sein, wenn das entsprechende Verfahren, insbesondere das Hineinfahren und/oder das Herausfahren schrittweise erfolgt. Alternativ oder zusätzlich kann aus demselben Grund aber auch das wenigstens teilweise Hineinfahren in den Behälter, das Verfahren in Richtung einer Stellung außerhalb des Behälters und/oder das Herausfahren aus dem Behälter abhängig von dem Laderaum, von der Höhe des Stapels von Packstücken, von der Lage des Stapels von Packstücken, von der Kontur des Stapels von Packstücken und/oder von der Kontur der Stirnseite des Stapels von Packstücken erfolgen. So wird letztlich eine hohe Effizienz und damit Effektivität erreicht.

Wenn wenigstens ein Handelement über einen Mehrachsarm mit der Führungseinrichtung, der wenigstens einen Führung, einer weiteren Führung verbunden ist, kann das Beladen des Behälters, insbesondere für bestimmte Packstücke oder an bestimmten Stellen im Laderaum, vereinfacht und/oder beschleunigt werden. Dabei bietet es sich besonders an, wenn das wenigstens eine vom Mehrachsarm gehaltene Handelement um wenigstens zwei unterschiedliche Schwenkachsen des Mehrachsarms schwenkbar ist. Dies gilt in besonderem Maße dann, wenn wenigstens zwei Schwenkachsen wenigstens im Wesentlichen rechtwinklig zueinander angeordnet sind. In diesem Zusammenhang kann ein Handelement oder können alle Handelemente über einen Mehrachsarm mit der Führungseinrichtung, der wenigstens einen Führung, einer weiteren Führung verbunden sein. Besonders zweckmäßig ist es infolge der unterschiedlichen Aufgaben beim Beladen von Behältern mit Packstücken, wenn wenigstens ein Handelement über einen Mehrachsarm mit der Führungseinrichtung, der wenigstens einen Führung, einer weiteren Führung verbunden ist und wenigstens ein anderes Handelement nicht. Das wenigstens eine andere Handelement kommt also bedarfsweise ohne einen zugeordneten Mehrachsarm aus.

Das wenigstens eine von dem wenigstens einen Mehrachsarm gehaltene Handelement sich in besonderem Maße dazu an, eine oberste Lage von Packstücken des Stapels von Packstücken in den Behälter abzulegen. Dies begründet sich insbesondere darin, dass der Laderaum des Behälters nach oben hin begrenzt ist und an das Ablegen der oberen Lagen mithin andere Anforderungen gestellt werden als an das Ablegen der unteren Lagen. Aus diesem Grunde ist es besonders zweckmäßig, wenn die oberste Lage von Packstücken des Stapels von Packstücken unterhalb des oberen Ende des Laderaums und/oder Dachs des Behälters, vorzugsweise angrenzend zum oberen Ende des Laderaums und/oder das Dachs des Behälters, von dem wenigstens einen vom Mehrachsarm gehaltenen Handelement angeordnet wird. Das Ablegen kann dann bedarfsweise eher von vorne als von oben erfolgen. Dazu kann es sich dann anbieten, dass das Packstück von dem Handelement wenigstens im Wesentlichen von vorne gehalten wird. Dabei ist es jedoch nicht unbedingt ausgeschlossen, dass das Packstück von dem Handelement wenigstens auch von oben und/oder unten und/oder hinten gehalten wird.

Aufgrund der angesprochenen unterschiedlichen Anforderungen an das Ablegen der Packstücke, und zwar insbesondere im Hinblick auf den für das Handhaben der Packstücke zur Verfügung stehenden Raum, kann es vorteilhaft sein, wenn wenigstens eine untere Lage von Packstücken des Stapels von Packstücken mit wenigstens einem unteren, insbesondere nicht über einen Mehrachsarm an der zugeordneten Führung gehaltenen, Handelement in den Behälter abgelegt wird. Demgegenüber wird dann wenigstens eine obere Lage von Packstücken des Stapels von Packstücken mit wenigstens einem oberen, über einen Mehrachsarm an der zugehörigen Führung gehaltenen Handelement in den Behälter abgelegt.

Da die Reichweite des wenigstens einen Mehrachsarms zum Verstellen des wenigstens einen Handelements im Verhältnis zur Länge und/oder Breite des zu beladenen Laderaums begrenzt sein kann, bietet es sich an, wenn die wenigstens eine obere Lage von Packstücken des Stapels von Packstücken schrittweise vom wenigstens einen oberen Handelement gebildet wird. Die wenigstens eine obere Lage wird also in einer Längs- und/oder Quererstreckung geschaffen, welche von der Reichweite des Mehrachsarms ermöglicht wird. Danach können dann weitere untere Lagen gebildet oder ergänzt werden, so dass anschließend wieder angepasst an die Reichweite des wenigstens einen Mehrachsarms ein weiterer Abschnitt der wenigstens einen oberen Lage an Packstücken gebildet werden kann. Andernfalls könnte der Mehrachsarm gegebenenfalls nicht weit genug in den Laderaum hineinreichen, um die wenigstens eine obere Lage in einem Schritt mit Packstücken zu versehen. Mithin kann also bedarfsweise wenigstens zwischen zwei Schritten des Bildens der wenigstens einen oberen Lage durch das obere Handelement wenigstens eine untere Lage von Packstücken des Stapels von Packstücken gebildet werden. Dabei ist es aus den genannten Gründen zweckmäßig, wenn diese wenigstens eine untere Lage von dem wenigstens einen unteren Handelement erstellt wird.

Um ein zweckmäßiges, wenigstens in Teilen schrittweises Beladen des Behälters in einer Weise zu erreichen, die den vorhandenen Laderaum möglichst umfänglich ausnutzt, kann der Stapel von Packstücken wenigstens im Wesentlichen aus mehreren angrenzend zueinander oder einander wenigstens teilweise überlappenden vorgesehenen Säulen von Packstücken des Stapels von Packstücken gebildet werden. So wird dann erst in einem vorderen Bereich des Laderaums ein Stapel von Packstücken bis angrenzend zum Dach des Behälters gebildet, während zu einem späteren Zeitpunkt wenigstens ein weiterer, hinterer Stapel von Packstücken bis angrenzend zum Dach des Behälters gebildet wird. Die oberen oder wenigsten die oberste Lage von Packstücken im Behälter wird dann schrittweise gebildet, wenn jeweils nacheinander die unteren Lagen der Stapel aufgebaut sind. Mit anderen Worten können wenigstens zwei Säulen von Packstücken des Stapels von Packstücken nacheinander im Behälter gebildet werden. Dies bedeutet aber nicht, dass die beiden Säulen voneinander getrennt sein müssten oder zwischen einander eine ebene vertikale Grenzschicht bilden müssten. Die beiden Säulen können vielmehr zur besseren Ausnutzung des Laderaums ineinander greifen oder gar ineinander übergehen. Mit anderen Worten muss nicht erst eine Säule fertiggestellt werden, bevor mit der nächsten Säule angefangen wird, auch wenn dies der Einfachheit halber bevorzugt sein kann. Es kann also bedarfsweise auch mit einer Säule angefangen werden, bevor die vorhergehende Säule fertiggestellt ist. Dann ist es allerdings grundsätzlich zweckmäßig, wenn die vorhergehende Säule abgeschlossen ist, bevor die oberste Lage oder die oberen Lagen der nachfolgenden Säulen aus Packstücken gebildet werden.

Grundsätzlich lässt sich eine hohe Flexibilität beim Beladen des Behälters gewinnbringend nutzen, wenn das wenigstens eine Handelement wenigstens im Wesentlichen in horizontaler Richtung verschoben werden kann, und zwar der Einfachheit und Zuverlässigkeit halber insbesondere längs der wenigstens einen Führung. Dies gilt insbesondere dann, wenn das untere Handelement und das obere Handelement an unterschiedlichen, vorzugsweise wenigstens im Wesentlichen parallel zueinander ausgerichteten, Führungen gehalten sowie jeweils mittels und/oder entlang der jeweils zugehörigen Führung verschoben werden können. Auch hier ist es der Einfachheit und Zuverlässigkeit halber bevorzugt, wenn die entsprechenden Handelemente längs der jeweils zugehörigen Führung verschoben werden können.

Nachfolgend wird die Erfindung anhand einer lediglich Ausführungsbeispiele darstellenden Zeichnung näher erläutert. In der Zeichnung zeigt
- Fig. 1: ein Fingerelement einer erfindungsgemäßen Vorrichtung zur Durchführung des erfindungsgemäßen Verfahrens in einer Seitenansicht,
- Fig. 2A-C: das Funktionsprinzip des Fingerelements aus Fig. 1 beim Verstellen von Flankenelementen gegeneinander,
- Fig. 3: das Funktionsprinzip des Fingerelements aus Fig. 1 beim autoadaptiven Verstellen einer Flanke,
- Fig. 4: ein alternatives Fingerelement einer erfindungsgemäßen Vorrichtung zur Durchführung des erfindungsgemäßen Verfahrens in einer Seitenansicht,
- Fig. 5A-D: einzelne Verfahrensschritte bei der Durchführung des erfindungsgemäßen Verfahrens mit einer erfindungsgemäßen Vorrichtung in einer schematischen Seitenansicht und
- Fig. 6: einen Verfahrensschritt des erfindungsgemäßen Verfahrens mit der erfindungsgemäßen Vorrichtung in einer perspektivischen Ansicht.

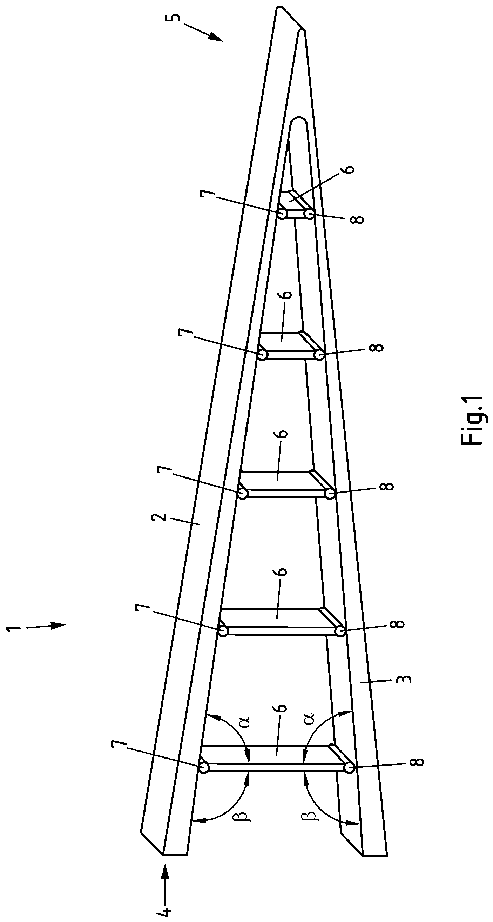

In der Fig. 1 ist ein Fingerelement 1 dargestellt, das ein autoadaptives Verformen ermöglicht. Das Fingerelement 1 weist zwei Flankenelemente 2,3 auf, die bei dem dargestellten und insoweit bevorzugten Fingerelement 1 gemeinsam von einem Ende 4 des Fingerelements 1 zum gegenüberliegenden Ende 5 des Fingerelements 1 verlaufen. Zudem nähern sich die Flankenelemente 2,3 in einer Längsrichtung des Fingerelements 1 kontinuierlich einander an. Während die Flankenelemente 2,3 an einem Ende 4 des Fingerelements 1 voneinander beabstandet sind, sind die Flankenelemente 2,3 am anderen Ende 5 des Fingerelements 1 direkt miteinander verbunden. Daher wird ein sich in eine Richtung verjüngendes, konisch zulaufendes Fingerelement 1 erhalten.

Zwischen den Flankenelementen 2,3 sind über die Länge des Fingerelements 1 verteilt Stege 6 vorgesehen, über die die Flankenelemente 2,3 miteinander verbunden sind. Beim dargestellten und insoweit bevorzugten Fingerelement 1 sind die Stege 6 an beiden gegenüberliegenden Enden 7,8 über Gelenke gelenkig mit den Flankenelementen 2,3 verbunden. Alternativ könnten die Stege 6 flexibel ausgebildet sein. Die Stege 6 sind bei dem dargestellten und insoweit bevorzugten Fingerelement 1 in gleichmäßigen Abständen über die Länge des Fingerelements 1 verteilt. Dies ist jedoch nicht zwingend erforderlich. Auch ist es nicht zwingend erforderlich, dass die Stege 6 wie bei dem dargestellten Fingerelement 1 parallel zueinander verlaufen. Bevorzugt ist es jedoch, dass die Stege 6 mit jedem der Flankenelemente 2,3 auf einer Seite einen spitzen Winkel α und auf der gegenüberliegenden Seite einen stumpfen Winkel β bilden.

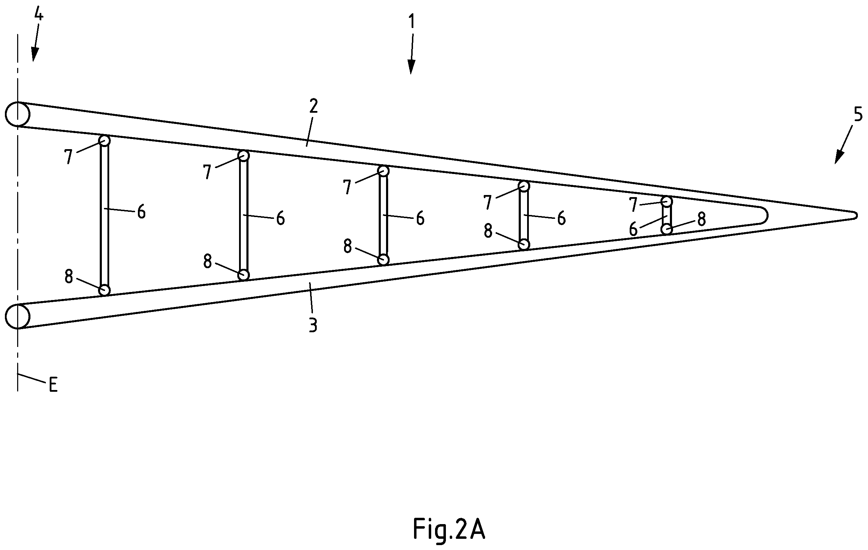

Die dargestellten und insoweit bevorzugten Flankenelemente 2,3 sind flexibel ausgebildet, so dass sich die Flankenelemente 2,3 um eine Achse senkrecht zur Längserstreckung des Fingerelements 1 biegen lassen, was insbesondere in den Fig. 2A-C dargestellt ist. Hierzu ist es zweckmäßig, wenn die Flankenelemente 2,3 aus einem flexiblen Kunststoff oder beispielsweise Gummi gebildet sind. Die Stege 6 können ebenfalls aus Kunststoff oder beispielsweise aus einem Metall gebildet sein, da die Stege 6 keine Flexibilität aufweisen müssen. In der Fig. 2A ist das Fingerelement 1 aus Fig. 1 in einer Ausgangsstellung dargestellt, bei der das Fingerelement 1 in einer gestreckten Ausrichtung vorliegt, wobei die freien Enden der Flankenelemente 2,3 in einer Ebene E angeordnet sind. Bei dem dargestellten und insoweit bevorzugten Fingerelement 1 sind die Flankenelemente 2,3 in dieser Stellung wenigstens im Wesentlichen symmetrisch zueinander ausgebildet.

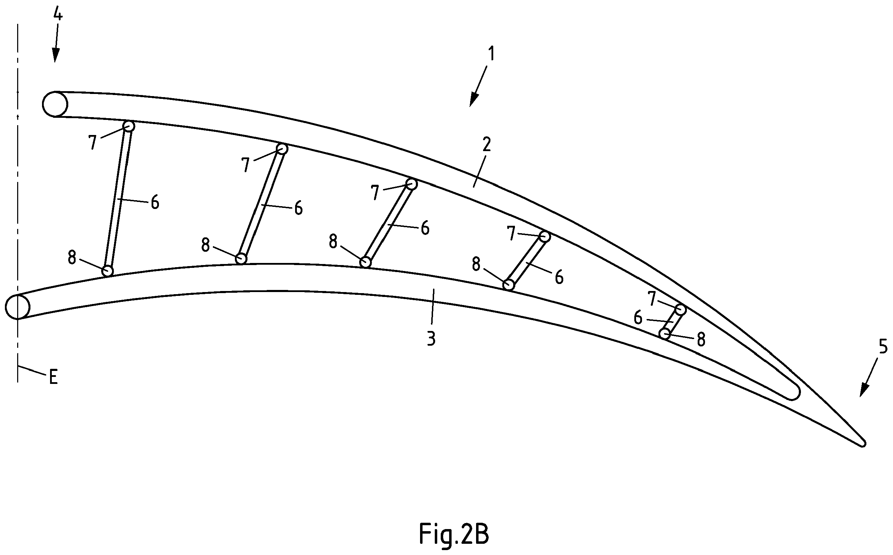

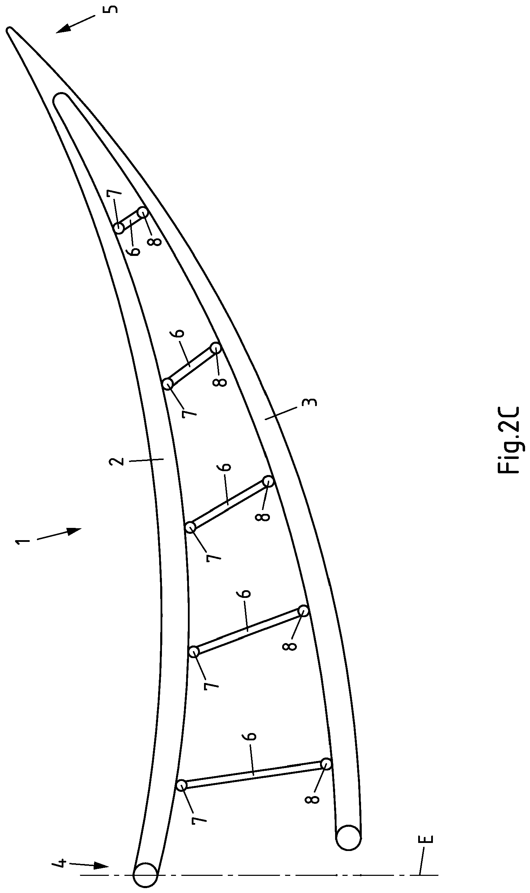

Wenn nun gemäß Fig. 2B gegenüber der Ausgangsstellung das freie Ende des oberen Flankenelements 2 aus der dargestellten Ebene E in Längsrichtung des Fingerelements 1 nach vorne verschoben wird, krümmt sich das Fingerelement 1 infolge der Verbindung der Flankenelemente 2,3 über die Mehrzahl von Stegen 6 nach unten. Es wird auf diese Weise das rechts dargestellte Ende 5 des Fingerelements 1 nach unten verstellt. Analog krümmt sich die Fingereinheit 1 gemäß Fig. 2C nach oben, wobei das entsprechende Ende 5 des Fingerelements 1 nach oben verstellt wird, wenn das freie Ende des unteren Flankenelements 3 in Längsrichtung des Fingerelements 1 aus der Ebene E nach vorne in Richtung der sich krümmenden Spitze des Fingerelements 1 verschoben wird. Den Fig. 2A-C kann ferner entnommen werden, dass die Streben 6 zwischen den Flankenelementen 2,3 sich beim Krümmen des Fingerelements 1 in unterschiedliche Richtungen neigen.

Um das Verschieben der Flankenelemente 2,3 analog zu den Fig. 2A-C zu bewerkstelligen, kann eine nicht dargestellte Antriebseinheit vorgesehen sein. Dabei sind geeignete Antriebseinheiten aus dem Stand der Technik bekannt. Geeignete Antriebseinheiten können beispielsweise wenigstens einen Linearantrieb aufweisen. So kann wenigstens ein Flankenelement 2,3 problemlos in Längsrichtung des Fingerelements 1 vor und zurück verstellt werden.

Nicht dargestellt ist, dass auch mehr als zwei, beispielsweise wenigstens drei oder vier, Flankenelemente vorgesehen sein können. Der Einfachheit halber sind diese dann, insbesondere gleichmäßig, verteilt um eine Längsachse des Fingerelements angeordnet. Die mehreren Flankenelemente können dann, insbesondere mit freien Enden, in einer gemeinsamen Spitze des Fingerelements zusammenlaufen. Zudem oder alternativ können die Stege vorzugsweise jeweils alle Flankenelemente miteinander verbinden. Die dargestellten und insoweit bevorzugten Flankenelemente 2,3 sind streifenförmig ausgebildet. Es wäre aber auch eine plattenförmige oder stabförmige Ausgestaltung der Flankenelemente möglich.

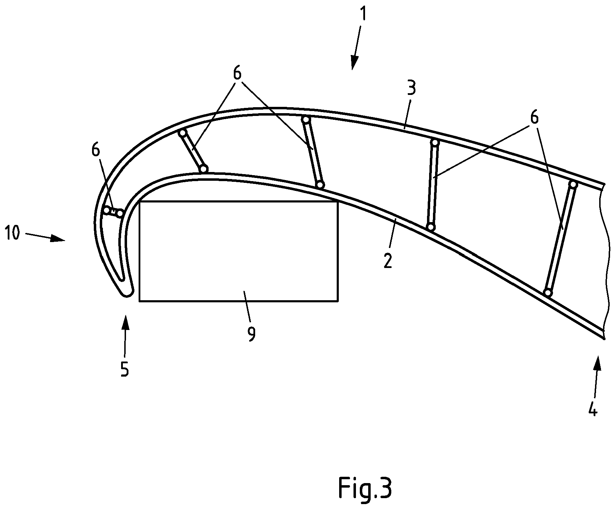

Das beschriebene Fingerelement 1 kann aber noch anders als in den Fig. 2A-C dargestellt verstellt werden, und zwar gemäß Fig. 3, die ein autoadaptives Verstellen eines Flankenelements 2,3 des Fingerelements 1 zeigt, während ein Flankenelement 2 auf ein Packstück 9 drückt und dabei gebogen wird. Das entsprechende Flankenelement 2 wird lokal in Richtung der Druckkraft F nach innen bezogen auf das Fingerelement 1 verschoben, was infolge der Kopplung der Flankenelemente 2,3 über die Stege 6 dazu führt, dass das Flankenelement 2 an einer anderen Stelle, und zwar in Richtung der beiden miteinander verbundenen Enden 10 der Flankenelemente 1 an dem links dargestellten Ende 5 der Fingereinheit 5, in Richtung des Packstücks 9 gekrümmt wird. Dadurch wird das Packstück 9 von dem Fingerelement 1 teilweise umgriffen. Ein analoges autoadaptives Verstellen des Fingerelements 1 erfolgt, wenn das Packstück von oben gegen das obere Flankenelement 2 des Fingerelementes 1 drückt, wobei sich das freie Ende des Fingerelements jedoch entgegen der Darstellung der Fig. 3 nach oben verstellt. Das Fingerelement krümmt sich dann also gerade andersherum als dies in der Fig. 3 dargestellt ist.

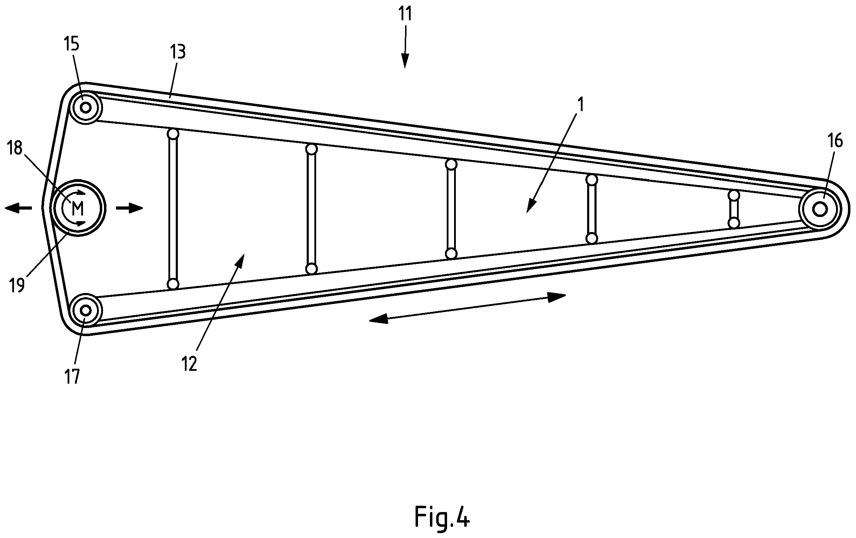

In der Fig. 4 ist eine Bandfördereinrichtung 11 dargestellt, bei der die Tragkonstruktion 12 der Bandfördereinrichtung 11 aus einem Fingerelement 1 gemäß Fig. 1 besteht. Das Förderband 13 der Bandfördereinrichtung 11 läuft um die Tragkonstruktion 12 und damit um das Fingerelement 1 herum. Dazu weist die dargestellte und insoweit bevorzugte Bandfördereinrichtung 11 mehrere Umlenkungen in Form von Umlenkrollen 15,16,17 auf. Eine Umlenkrolle 15 ist an den miteinander verbundenen Enden 10 der Flankenelemente 2,3 vorgesehen, wobei die Umlenkrolle 15 letztlich von dem entsprechenden Ende 5 des Fingerelements 1 getragen und gestützt wird. Ferner ist jeweils eine Umlenkung in Form einer Umlenkrolle 16,17 an den freien Enden der Flankenelemente 2,3 vorgesehen. Des Weiteren ist ein Antrieb 18 vorgesehen, der bei der dargestellten und insoweit bevorzugten Bandfördereinrichtung 13 das Förderband 13 in unterschiedliche Richtungen antreiben kann. Der Antrieb 18 erfolgt über eine Antriebsrolle 19, die bedarfsweise zum Spannen des Förderbands 13 beispielsweise in Längsrichtung des Fingerelements 1 verstellt werden kann. Zudem kann für einen schlupffreien Antrieb des Förderbands 13 an dem Förderband 13 eine Verzahnung vorgesehen sein, die mit einer Verzahnung der Antriebsrolle 19 kämmt. Anders als bei der dargestellten und insoweit bevorzugten Bandfördereinrichtung 11 kann die Tragkonstruktion 12, um die das Förderband 13 umläuft, neben dem Fingerelement 1 noch weitere Tragstrukturteile aufweisen.

Bei der dargestellten und insoweit bevorzugten Bandfördereinrichtung 11 wird das Förderband 13 entlang der Flankenelemente 2,3 geführt, und zwar so nahe, dass das Förderband 13 bedarfsweise durch ein Packstück 9 gegen ein Flankenelement 2,3 gedrückt werden kann. Das Fingerelement 1 kann dabei autoadaptiv oder proaktiv in Bezug auf das entsprechende Packstück 9 verstellt werden, wie dies bereits beschrieben worden ist. Es können bei dem Fingerelement 1 der in der Fig. 4 dargestellten Bandfördereinrichtung 11 also auch die Flankenelemente 2,3 in Längsrichtung des Fingerelements 1 gegeneinander verschoben werden, um das Fingerelement 1 zu krümmen. Mit dem dadurch einhergehenden Verstellen eines Endes 5 des Fingerelements 1 in einer Richtung senkrecht zur Längserstreckung des Fingerelements 1 werden auch das Förderband 13 und dessen Verlauf um das Fingerelement 1 herum verstellt. Wenn das Förderband 13 auch bei einem gekrümmten Fingerelement 1 in geringem Abstand zu den Flankenelementen 2,3 an diesen entlang geführt werden soll, müssen bedarfsweise weitere nicht dargestellte Einrichtungen zum Positionieren des Förderbands 13 zwischen den Umlenkrollen 15,16,17 angrenzend zu den Flankenelementen 2,3 oder wenigstens einem Flankenelement 2,3 vorgesehen werden.

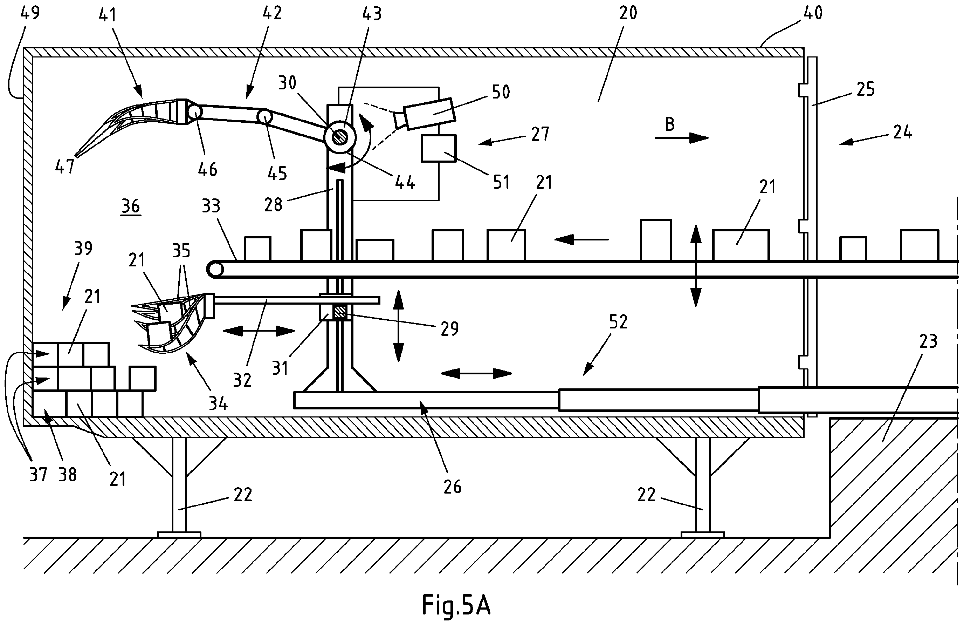

In den Fig. 5A-D ist das Verfahren zum Beladen eines Behälters 20 mit Packstücken 21 in einzelnen Schritten veranschaulicht. Bei dem Behälter 20 handelt es sich dabei um einen Wechselbehälter, der auf seinen Beinen 22 an einer Laderampe 23 abgestellt worden ist. Der Behälter 20 kann nach dem Beladen mit Packstücken 21 von einem Nutzfahrzeug, etwa in Form eines Anhängers unterfahren und mit dem Nutzfahrzeug gekoppelt werden. Dann lassen sich die Beine 22 hochschwenken und der Behälter 20 mit dem Nutzfahrzeug über den öffentlichen Straßenverkehr verfahren. Der Behälter 20 ist an seiner Rückseite 24 geöffnet, wozu zwei Flügeltüren 25 in eine offene Stellung geschwenkt worden sind. Sodann wird eine Führungseinrichtung 26einer Vorrichtung 27 zum Beladen des Behälters 20 teilweise in den Behälter 20 hineingefahren, wozu die Führungseinrichtung 26 ein teleskopierbares Führungssystem 52 umfasst, mit dem die Führungseinrichtung 26 in der Beladerichtung B vor und zurück verschoben werden kann.

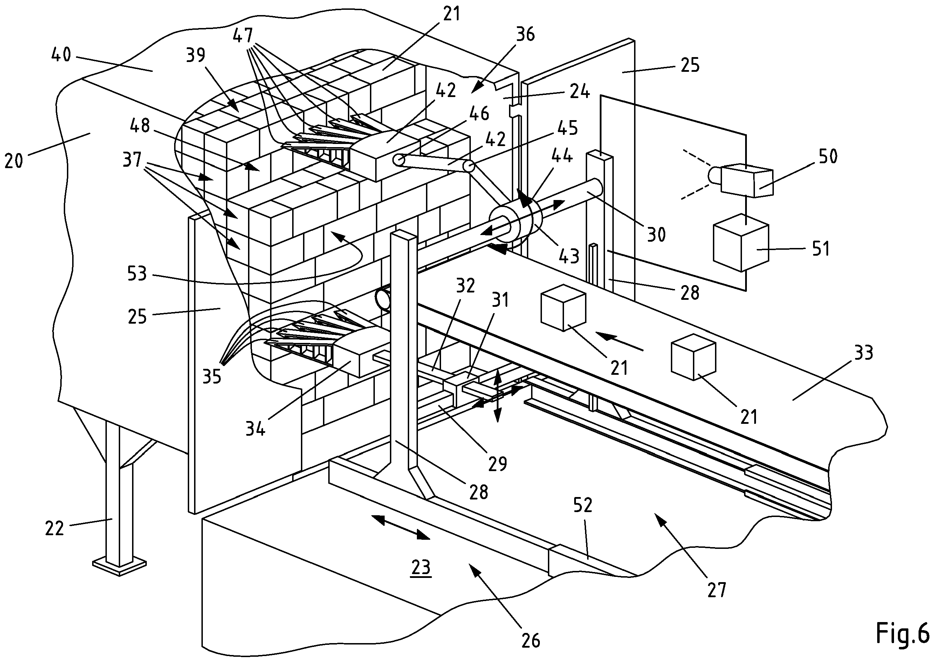

Der Behälter 20 und die Führungseinrichtung 26 sind zudem in der Fig. 6 in einer perspektivischen Ansicht bei bereits nahezu beladenem Behälter 20 dargestellt. In dieser perspektivischen Ansicht ist insbesondere der Aufbau der Vorrichtung 27 und der Führungseinrichtung 26 besser ersichtlich. Im Folgenden wird daher zunächst auf die Fig. 5A-D und die Fig. 6 gemeinsam Bezug genommen.

Die Führungseinrichtung 26 weist zwei Ständerelemente 28 auf, zwischen denen zwei Führungen 29,30 angeordnet sind. An einer unteren Führung 29 ist über ein Schlittenelement 31 eine weitere Führung 32 festgelegt. Das Schlittenelement 31 erlaubt ein Verstellen der weiteren Führung 32 nach links und rechts, indem das Schlittenelement 31 entlang der zugehörigen Führung 29 nach links und rechts verschoben werden kann. Gegenüber dem Schlittenelement 31 wiederum kann die weitere Führung 32 vor und zurück verstellt werden. Zudem kann die sich zwischen den Ständerelementen 28 erstreckende untere Führung 29 nach oben und nach unten verschoben werden, wozu die entsprechende Führung 29 entsprechend verschiebbar an den Ständerelementen 28 montiert ist.

Bei dem dargestellten und insoweit bevorzugten Ausführungsbeispiel ist die Führungseinrichtung 26 in Form einer Schieneneinrichtung ausgebildet, wobei die untere Führung 29 und die weitere Führung 32 der Führungseinrichtung 26 als untere Schiene und weitere Schiene ausgebildet sind. Mithin kann das Führungssystem 52 bei dem dargestellten und insoweit bevorzugten Ausführungsbeispiel auch als Schienensystem verstanden werden.

Der entsprechenden Führung 29 ist eine Fördereinrichtung 33 in Form einer Bandfördereinrichtung zugeordnet, die ebenfalls nach oben und nach unten verstellt werden kann und vereinzelte Packstücke 21 zuführt. Dem vorderen Ende der Fördereinrichtung 33 ist ein Handelement 34 zugeordnet, das mit einer Mehrzahl von Fingerelementen 35 versehen ist und somit die Packstücke 21 von der Fördereinrichtung 33 übernehmen kann. Dazu werden die Packstücke 21 bei der dargestellten und insoweit bevorzugten Vorrichtung 27 von der Fördereinrichtung 33 in das Handelement 34 fallengelassen, das die Packstücke 21 durch entsprechendes Verstellen der Fingerelemente 35 unter Ausnutzung des bereits beschriebenen Fin Ray Effekts der Fingerelemente 35 ähnlich einer teilweise geöffneten menschlichen Hand halten, deren Handinnenfläche nach oben gedreht ist.

Das Handelement 34 ist an dem vorderen Ende der weiteren Führung 32 vorgesehen und kann nun durch Verstellen der unteren Führung 29 und der weiteren Führung 32 die Packstücke 21 über einen vorderen Abschnitt des Laderaums 36 des Behälters 20 in einzelnen Lagen 37 ablegen, wie dies in der Fig. 5A dargestellt ist. Dies erfolgt beispielsweise über ein Absenken von Fingerelementen 35 des Handelements 34, über ein Strecken von Fingerelementen 35 des Handelements 24 und/oder durch ein Spreizen der Fingerelemente 35 des Handelements 34. Die Erstreckung der einzelnen Lagen 37 wird dabei im Wesentlichen durch die Länge der unteren Führung 29 und der weiteren Führung 32 vorgegeben. Auf diese Weise wird zunächst im vorderen Abschnitt des Laderaums 36 eine sich über die Breite des Laderaums 36 erstreckende Säule 38 aus mehreren übereinander angeordneten Lagen 37 von Packstücken 21 gebildet, wobei das Handelement 34 die Packstücke 21 mehr oder weniger nacheinander in den entsprechenden Lagen 37 ablegt und so letztlich ein Stapel 39 von Packstücken 21 bildet. Dieser Stapel 39 von Packstücken 21 setzt sich dabei aus einzelnen ineinander übergehenden Säulen 38 von Packstücken 21 zusammen.

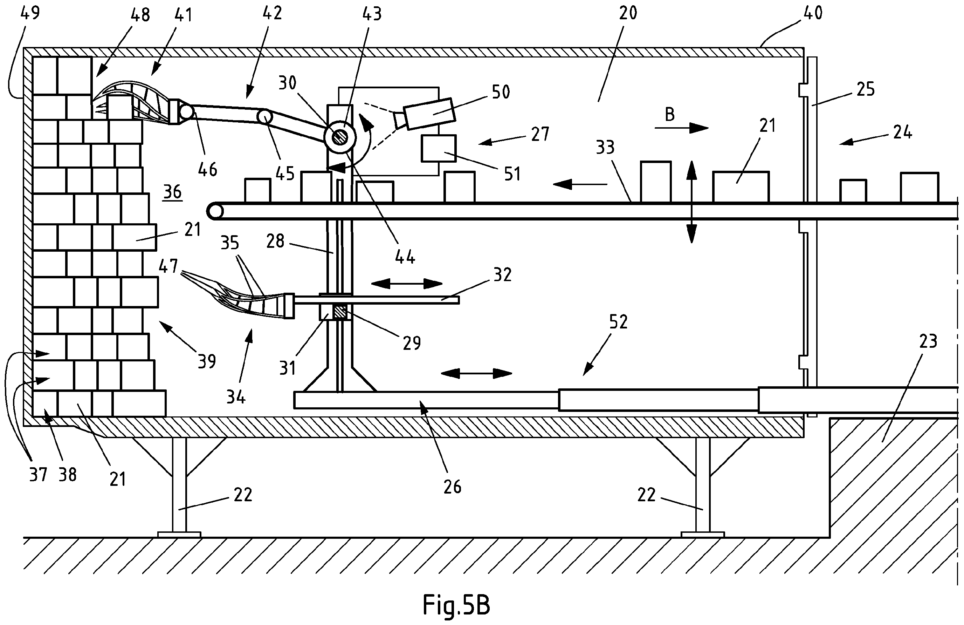

Wenn eine Säule 38 sich nach oben bis in den Bereich des Dachs 40 des Behälters 20 erstreckt, verbleibt zwischen dem oberen Rand der Säule 38 und dem Dach 40 des Behälters 20 nicht mehr genug Platz, um auf die beschriebene Weise weiter Packstücke 21 auf der Säule 38 abzulegen, wie dies in der Fig. 5B dargestellt ist. Hierzu wird ein weiteres, oberes Handelement 41 verwendet, das über einen Mehrachsarm 42 an einem Schlittenelement 43 an der oberen Führung 30 festgelegt ist. Die obere Führung 30 erstreckt sich wie die untere Führung 29 zwischen den Ständerelementen 28, wobei das Schlittenelement 43 entlang der oberen Führung 30 nach links und rechts verschoben werden kann. Zudem kann das obere Schlittenelement 43 um die zugehörige obere Führung 30 geschwenkt werden, wobei die Schwenkachse wenigstens im Wesentlichen parallel mit der Längsachse der oberen Führung 30 ausgerichtet ist. Neben diesem Schwenkgelenk 44 weist der Mehrachsarm 42 zwei weitere Schwenkgelenke 45,46 auf, von denen das mittlere Schwenkgelenk 45 eine Schwenkachse aufweist, die wenigstens im Wesentlichen rechtwinklig zu den Schwenkachsen der beiden äußeren Schwenkgelenke 44,46 ausgerichtet ist. Infolge des Mehrachsarms 42 kann das obere Handelement 41, dem ebenfalls eine Mehrzahl von Fingerelementen 47 zugeordnet ist, einzelne Packstücke 21 von der Fördereinrichtung 33 entnehmen und in den Spalt 48 zwischen dem Dach 40 und der Säule 38 aus Packstücken 21 einlegen. Die Packstücke 21 reichen anschließend bedarfsweise bis an das Dach 40 heran oder wenigstens nahe an das Dach 40 heran, um den Laderaum 36 des Behälters 20 möglichst effizient ausnutzen zu können.

Da der Mehrachsarm 42 nur eine begrenzte Reichweite hat und dies grundsätzlich auch für das untere Handelement 34 gilt, ist es in vielen Fällen nicht bevorzugt, wenn sich die einzelnen Lagen 37, die beim Beladen des Behälters 20 ohne Unterbrechung erstellt werden, über die gesamte Länge und die gesamte Breite des Laderaums 36 des Behälters 20 erstrecken. Vielmehr ist es zweckmäßig, den Stapel 39 an Packstücken 21 im Laderaum 36 des Behälters 20 über einzelne Säulen 38 zu bilden, die nacheinander erstellt werden und so ineinander übergehen können, dass anschließend nicht mehr zwischen den einzelnen Säulen 38 unterschieden werden kann. Der Begriff der Säule 38 ist daher weniger im üblichen Sinne zu verstehen. Der Begriff der Säule 38 soll vielmehr veranschaulichen, dass der Stapel 39 von Packstücken 21 zunächst in bestimmten Abschnitten des Laderaums 36 des Behälters 20 nach oben wächst, und zwar insbesondere bis ans Dach 40 oder bis in die Nähe des Dachs 40, und in anderen Abschnitten des Laderaums 36 in einem späteren Arbeitsschritt nach oben wächst, und zwar wiederum bevorzugt bis ans Dach 40 oder in die Nähe des Dachs 40.

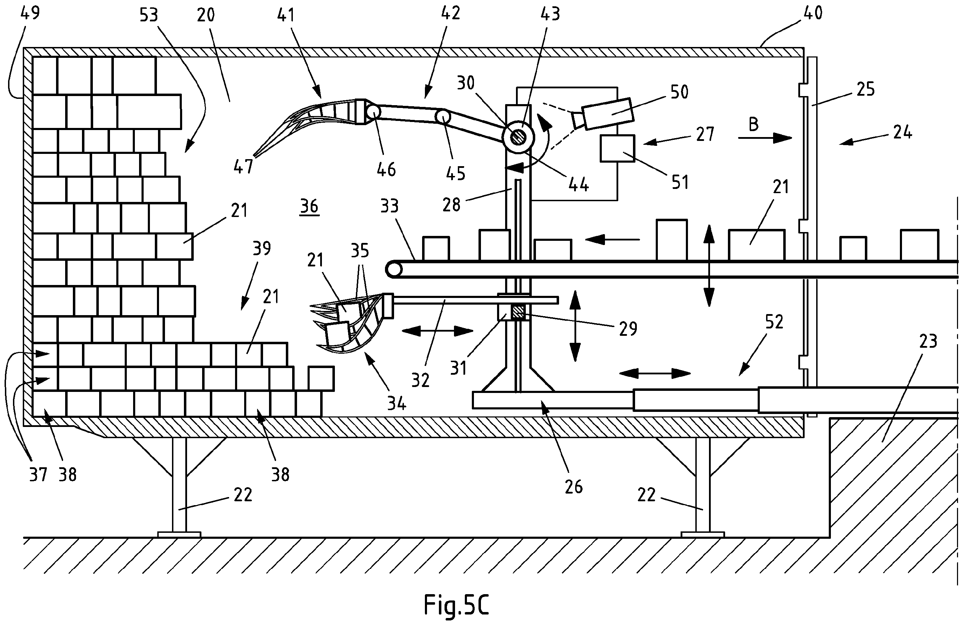

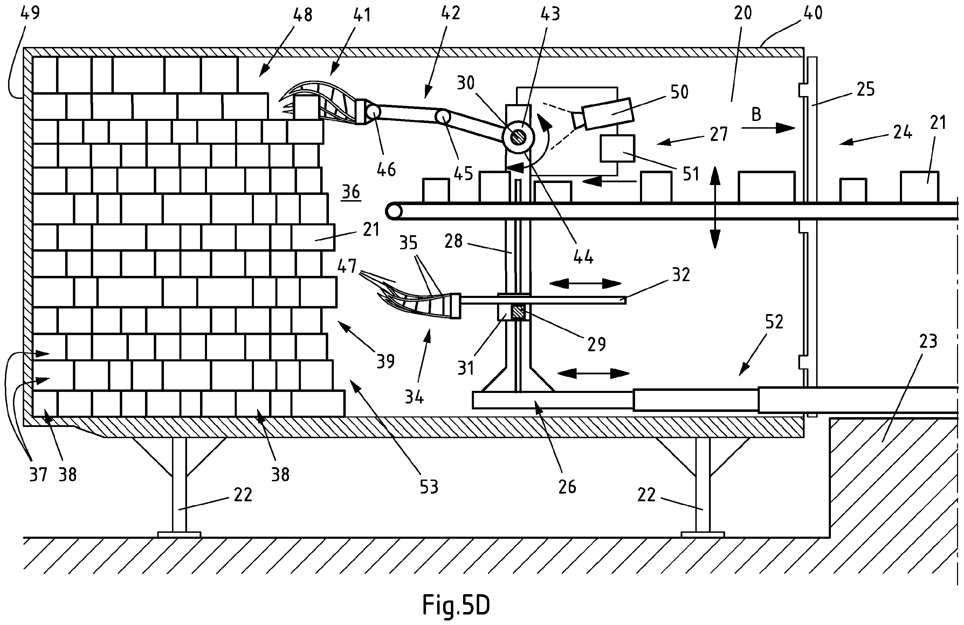

Dieses Vorgehen ist in den Fig. 5C und 5D veranschaulicht. Nachdem angrenzend an die Stirnwand 49 des Behälters 20 eine Säule 38 aus Packstücken 21 erstellt worden ist, wird die Führungseinrichtung 26 etwas zurückgezogen, um Platz zu schaffen für eine weitere Säule 38 aus Packstücken 21, die mit der bereits erstellten Säule 38 aus Packstücken 21 verschmelzen soll. Sodann wird die zweite Säule 38 aus Packstücken 21 in einem unteren Abschnitt durch das untere Handelement 34 aufgebaut, wie dies zuvor bereits im Zusammenhang mit der Fig. 5A für die vordere Säule 38 von Packstücken 21 beschrieben worden ist. Wenn die zweite Säule 38 des Stapels 39 von Packstücken 21 eine bestimmte Höhe erreicht hat, wird der verbleibende Spalt 48 zwischen den Packstücken 21 und dem Dach 40 des Behälters 20 mit dem oberen Handelement 41 gefüllt, wie dies bereits im Zusammenhang mit der Fig. 5B beschrieben worden ist. Sodann werden die Schritte gemäß den Fig. 5C und 5D wiederholt nacheinander durchgeführt, bis der Behälter 20 bis an die Öffnung der Rückseite 24 mit Packstücken 21 beladen ist.

Bei dem dargestellten und insoweit bevorzugten Ausführungsbeispiel weist die Vorrichtung 27 zum Beladen des Behälters 20 einen optischen Sensor 50 in Form einer Kamera und einer Steuerungseinrichtung 51 auf. Über den Sensor 50 wird der Laderaum 36 des mit Packstücken 21 zu beladenden Behälters 20, die Lage des Stapels 39 aus bereits abgelegten Packstücken 21, die Kontur des Stapels 21 und/oder die Kontur der Stirnseite 53 des Stapels 39 bereits abgelegter Packstücke 21 ermittelt. Anhand dieser Informationen kann dann das untere Handelement 34 und/oder das obere Handelement 41 von links nach rechts, also über die Breite des Laderaums 36 entlang der zugehörigen zwischen den Ständerelementen 28 vorgesehenen Führungen 29,30 verschoben werden. Alternativ oder zusätzlich kann das untere Handelement 34 und/oder das obere Handelement 41 aber auch anhand der entsprechenden, durch den Sensor 50 erfassten Information vor und zurück, also in der Beladerichtung B bzw. in Längsrichtung des Behälters 20, verstellt werden. Bei dem oberen Handelement 41 erfolgt dies über den Mehrachsarm 42 während dies bei dem unteren Handelement 34 über die zugeordnete weitere Führung 32 erfolgt. Zudem kann bei dem dargestellten und insoweit bevorzugten Ausführungsbeispiel anhand der genannten Information das obere Handelement 41, das untere Handelement 34 und die Fördereinrichtung 33 angehoben und abgesenkt werden. Für die Höhenverstellung des unteren Handelements 34 wird die untere sich zwischen den Ständerelementen 28 erstreckende Führung 29 entlang der Ständeelemente 28 hoch und runter gefahren. Die Höhenverstellung des oberen Handelements 41 erfolgt dabei der Einfachheit halber über den zugehörigen Mehrachsarm 42.

### Bezugszeichenliste

- 1: Fingerelement
- 2,3: Flankenelement
- 4,5: Ende Fingerelement
- 6: Steg
- 7,8: Ende Steg
- 9: Packstück
- 10: Ende
- 11: Bandfördereinrichtung
- 12: Tragkonstruktion
- 13: Förderband
- 15: Umlenkrolle
- 16: Umlenkrolle
- 17: Umlenkrolle
- 18: Antrieb
- 19: Antriebsrolle
- 20: Behälter
- 21: Packstück
- 22: Beine
- 23: Laderampe
- 24: Rückseite
- 25: Flügeltür
- 26: Führungseinrichtung
- 27: Vorrichtung
- 28: Ständerelement
- 29: Führung
- 30: Führung
- 31: Schlittenelement
- 32: Führung
- 33: Fördereinrichtung
- 34: Handelement
- 35: Fingerelement
- 36: Laderaum
- 37: Lage
- 38: Säule
- 39: Stapel
- 40: Dach
- 41: Handelement
- 42: Mehrachsarm
- 43: Schlittenelement
- 44-46: Schwenkgelenk
- 47: Fingerelement
- 48: Spalt
- 49: Stirnwand
- 50: Sensor
- 51: Steuerungseinrichtung
- 52: Führungssystem
- 53: Stirnseite
- B: Beladerichtung

## Patentansprüche

1. Verfahren zum Beladen eines Behälters (20), insbesondere Kofferaufbau, Wechselbehälter oder Rollbehälter, mit Packstücken (21), mit wenigstens einer, wenigstens eine Führung (29,30,32) umfassenden Führungseinrichtung (26), wobei an der wenigstens einen Führungseinrichtung (26) zwei, vorzugsweise in Längsrichtung der Führung (29,30,32), verschiebbare Handelemente (34,41) vorgesehen sind, wobei die Handelemente (34,41) eine Mehrzahl von Fingerelementen (35,47) aufweisen, wobei die Fingerelemente (35,47) jeweils wenigstens zwei sich gemeinsam von einem Ende des Fingerelements (35,47) zum gegenüberliegenden Ende des Finderelements (35,47) erstreckende flexible Flankenelemente (2,3) aufweisen, wobei jeweils die wenigstens zwei flexiblen Flankenelemente (2,3) der Fingerelemente (35,47) über eine Mehrzahl von Stegen (6) jeweils flexibel miteinander verbunden sind, so dass die Fingerelemente (35,47) jeweils von wenigstens einer gekrümmten Stellung in wenigstens eine gestreckte Stellung und zurück verstellt werden können,
- bei dem die Handelemente (34,41) nacheinander Packstücke (21) übernehmen,
- bei dem die Handelemente (34,41) die übernommenen Packstücke (21) nacheinander in Form eines Stapels (39) von Packstücken (21) in den Behälter (20) ablegen,
- bei dem die Handelemente (34,41) wenigstens zwischen dem Ablegen zweier aufeinanderfolgender Packstücke (21) entlang der wenigstens einen Führung (29,30,32) verschoben werden,
- bei dem die Handelemente (34,41) nach links und/oder nach rechts verstellt werden, die Handelemente (34,41) abhängig von dem Laderaum (36), von der Höhe des Stapels (39) von Packstücken (21), von der Lage des Stapels (39) von Packstücken (21), von der Kontur des Stapels (39) von Packstücken (21) und/oder von der Kontur der Stirnseite (53) des Stapels (39) von Packstücken (21) nach links und/oder nach rechts verstellt werden und
- bei dem die Handelemente (34,41) nach oben und/oder nach unten verstellt werden und die Handelemente (34,41) abhängig von dem Laderaum (36), von der Höhe des Stapels (39) von Packstücken (21), von der Lage des Stapels (39) von Packstücken (21), von der Kontur des Stapels (39) von Packstücken (21) und/oder von der Kontur der Stirnseite (53) des Stapels (39) von Packstücken nach (21) oben und/oder nach unten verstellt werden.

2. Verfahren nach Anspruch 1,
bei dem die Handelemente (34,41) und/oder die Fingerelemente (35,47) über eine Antriebseinheit zum Verstellen der wenigstens zwei Flankenelemente (2,3) in einer Längsrichtung des Fingerelements (34,41) gegeneinander von einer gekrümmten in eine gestreckten Stellung und/oder zurück verstellt werden und/oder
- bei dem wenigstens ein Handelement (34,41) und/oder wenigstens ein Fingerelement (35,47) mit wenigstens einem Drucksensor, vorzugsweise an wenigstens einem Flankenelement (2,3), verwendet wird und, vorzugsweise, der wenigstens eine Drucksensor den Druck auf das wenigstens eine Handelement (34,41), auf wenigstens ein Fingerelement (35,47) und/oder auf wenigstens ein Flankenelement (2,3) wenigstens eines Fingerelements (35,47) erfasst.

3. Verfahren nach Anspruch 1 oder 2,
- bei dem die Packstücke (21) durch wenigstens ein Handelement (34,41) von einer Fördereinrichtung (33), vorzugsweise einer Bandfördereinrichtung, insbesondere einem Teleskopbandförderer, übernommen werden und/oder
- bei dem die Packstücke (21) von wenigstens einem Handelement (34,41) wenigstens im Wesentlichen, vorzugsweise nacheinander, in Lagen (37) übereinander im Behälter (20) abgelegt werden.

4. Verfahren nach einem der Ansprüche 1 bis 3,
- bei dem der Laderaum (36) des mit Packstücken (21) zu beladenden Behälters (20), die Lage des Stapels (39) aus von einem Handelement (34,41) bereits abgelegten Packstücken (21), die Kontur des Stapels (39) aus von einem Handelement (34,41) bereits abgelegten Packstücken (21) und/oder die Kontur der Stirnseite (53) des Stapels (39) aus von einem Handelement (34,41) bereits abgelegten Packstücken (21) wenigstens teilweise von einem Sensor (50), vorzugsweise einem optischen Sensor, insbesondere einer Kamera, erfasst wird und
- bei dem, vorzugsweise, die Bewegung des Handelements (34,41) wenigstens teilweise in Abhängigkeit des von dem Sensor (50) erfassten Laderaums (36) und/oder Lage des Stapels (39) und/oder Kontur des Stapels (39) gesteuert wird.

5. Verfahren nach einem der Ansprüche 1 bis 4,
- bei dem ein Handelement (34,41) abhängig von dem Laderaum (36), von der Höhe des Stapels (39) von Packstücken (21), von der Lage des Stapels (39) von Packstücken (21), von der Kontur des Stapels (39) von Packstücken (21) und/oder von der Kontur der Stirnseite (53) des Stapels (39) von Packstücken (21), vorzugsweise längs der wenigstens einen Führung (29,30,32), verschoben wird und/oder
- bei dem ein Handelement (34,41) und/oder die wenigstens eine Führung (29,30,32) der Führungseinrichtung (26) vor und/oder zurück verstellt wird und, vorzugsweise, das eine Handelement (34,41) und/oder die wenigstens eine Führung (29,30,32) abhängig von dem Laderaum (36), von der Höhe des Stapels (39) von Packstücken (21), von der Lage des Stapels (39) von Packstücken (21), von der Kontur des Stapels (39) von Packstücken (21) und/oder von der Kontur der Stirnseite (53) des Stapels (39) von Packstücken (21) vor und/oder zurück verstellt wird.

6. Verfahren nach einem der Ansprüche 1 bis 5,
- bei dem die wenigstens eine Führung (29,30,32) der Führungseinrichtung (26) nach links und/oder nach rechts verstellt wird und, vorzugsweise, die wenigstens eine Führung (29,30,32) abhängig von dem Laderaum (36), von der Höhe des Stapels (39) von Packstücken (21), von der Lage des Stapels (39) von Packstücken (21), von der Kontur des Stapels (39) von Packstücken (21) und/oder von der Kontur der Stirnseite (53) des Stapels (39) von Packstücken (21) nach links und/oder nach rechts verstellt wird und/oder - bei dem die wenigstens eine Führung (29,30,32) der Führungseinrichtung (26) nach oben und/oder nach unten verstellt wird und, vorzugsweise, die wenigstens eine Führung (29,30,32) abhängig von dem Laderaum (36), von der Höhe des Stapels (39) von Packstücken (21), von der Lage des Stapels (39) von Packstücken (21), von der Kontur des Stapels (39) von Packstücken (21) und/oder von der Kontur der Stirnseite (53) des Stapels (39) von Packstücken nach (21) oben und/oder nach unten verstellt wird.

7. Verfahren nach einem der Ansprüche 1 bis 6,
- bei dem die wenigstens eine Führungseinrichtung (26), die wenigstens eine Führung (29,30,32) und/oder ein Handelement (34,41) zum Ablegen weiterer Packstücke (21), insbesondere zum Ablegen wenigstens einer weiteren Lage (37) von Packstücken (21), vorzugsweise schrittweise, in den Behälter (20) hineingefahren, weiter in den Behälter (20) hineingefahren, weiter in Richtung einer Stellung außerhalb des Behälters (20) verfahren und/oder aus dem Behälter (20) herausgefahren wird und
- bei dem, vorzugsweise, das wenigstens teilweise Hineinfahren in den Behälter (20), das Verfahren in Richtung einer Stellung außerhalb des Behälters (20) und/oder das Herausfahren aus dem Behälter (20) abhängig von dem Laderaum (36), von der Höhe des Stapels (39) von Packstücken (21), von der Lage des Stapels (39) von Packstücken (21), von der Kontur des Stapels (39) von Packstücken (21) und/oder von der Kontur der Stirnseite (53) des Stapels (39) von Packstücken (21) erfolgt.

8. Verfahren nach einem der Ansprüche 1 bis 7,
- bei dem wenigstens ein Handelement (41) über einen Mehrachsarm (42) mit der Führungseinrichtung (26), der wenigstens einen Führung (30), einer weiteren (30) Führung verbunden ist,
- bei dem das wenigstens eine von dem Mehrachsarm (42) gehaltene Handelement (41) um wenigstens zwei unterschiedliche Schwenkachsen des Mehrachsarms (42) schwenkbar ist und
- bei dem, vorzugsweise, wenigstens zwei Schwenkachsen wenigstens im Wesentlichen rechtwinklig zueinander angeordnet sind.

9. Verfahren nach Anspruch 8,
- bei dem mit dem wenigstens einen von dem Mehrachsarm (42) gehaltene Handelement (41) eine oberste Lage (37) von Packstücken (21) des Stapels (39) von Packstücken (21) in den Behälter (20) abgelegt wird und
- bei dem, vorzugsweise, die oberste Lage (37) von Packstücken (21) des Stapels (39) von Packstücken (21) unterhalb des oberen Endes des Laderaums (36) und/oder Dachs (40) des Behälters (20), vorzugsweise angrenzend zum oberen Ende des Laderaums (36) und/oder das Dachs (40) des Behälters (20) angeordnet wird.

10. Verfahren nach Anspruch 8 oder 9,
- bei dem wenigstens eine untere Lage (37) von Packstücken (21) des Stapels (39) von Packstücken (21) mit wenigstens einem unteren, insbesondere nicht über einen Mehrachsarm (42) an der zugeordneten Führung (29,32) gehaltenen, Handelement (34) in den Behälter (20) abgelegt wird und
- bei dem wenigstens eine obere Lage (37) von Packstücken (21) des Stapels (39) von Packstücken (21) mit wenigstens einem oberen, über einen Mehrachsarm (42) an der zugehörigen Führung (30) gehaltenen Handelement (41) in den Behälter (20) abgelegt wird.

11. Verfahren nach einem der Ansprüche 8 bis 10,
- bei dem die wenigstens eine obere Lage (37) von Packstücken (21) des Stapels (39) von Packstücken (21) schrittweise vom wenigstens einen oberen Handelement (41) gebildet wird und vorzugsweise, wenigstens zwischen zwei Schritten des Bildens der wenigstens einen oberen Lage (37) durch das obere Handelement (41) wenigstens eine untere Lage (37) von Packstücken (21) des Stapels (39) von Packstücken (21), insbesondere von dem unteren Handelement (34), gebildet wird.

12. Verfahren nach Anspruch 11,
- bei dem der Stapel (39) von Packstücken (21) wenigstens im Wesentlichen aus mehreren angrenzend zueinander oder einander wenigstens teilweise überlappend vorgesehenen Säulen (38) von Packstücken (21) des Stapels (39) von Packstücken (21) gebildet wird und
- bei dem, vorzugsweise, wenigstens zwei Säulen (38) von Packstücken (21) des Stapels (39) von Packstücken (21) nacheinander gebildet werden.

13. Verfahren nach einem der Ansprüche 10 bis 12
- bei dem ein Handelement (34,41) wenigstens im Wesentlichen in horizontaler Richtung, vorzugsweise längs der wenigstens einen Führung (29,30,32), verschoben werden kann und
- bei dem das untere Handelement (34) und das obere Handelement (41) an unterschiedlichen, vorzugsweise wenigstens im Wesentlichen parallel zueinander ausgerichteten, Führungen (29,30,32) gehalten sowie jeweils, vorzugsweise längs der jeweils zugehörigen Führung (29,30,32), verschoben werden können.

14. Vorrichtung (27) zum Beladen eines Behälters (20), insbesondere Kofferaufbau, Wechselbehälter oder Rollbehälter mit Packstücken, nach einem Verfahren der Ansprüche 1 bis 13, mit wenigstens einer, wenigstens eine Führung (29,30,32) umfassenden Führungseinrichtung (26), wobei an der wenigstens einen Führungseinrichtung (26) zwei, vorzugsweise in Längsrichtung der Führung (29,30,32), verschiebbare Handelemente (34,41) vorgesehen sind, wobei die Handelemente (34,41) eine Mehrzahl von Fingerelementen (35,47) aufweisen, wobei die Fingerelemente (35,47) jeweils wenigstens zwei sich gemeinsam von einem Ende des Fingerelements (35,47) zum gegenüberliegenden Ende des Finderelements erstreckende flexible Flankenelemente (2,3) aufweisen, wobei jeweils die wenigstens zwei flexiblen Flankenelemente (2,3) der Fingerelemente (35,47) über eine Mehrzahl von Stegen (6) jeweils flexibel miteinander verbunden sind, so dass die Fingerelemente (35,47) jeweils von wenigstens einer gekrümmten Stellung in wenigstens eine gestreckte Stellung und zurück verstellt werden können.

15. Vorrichtung nach Anspruch 14,
**dadurch gekennzeichnet, dass** die wenigstens eine Führung (29,30,32) in Form einer Schiene und die Führungseinrichtung (26) als eine die wenigstens eine Schiene umfassende Schieneneinrichtung ausgebildet ist.

## Claims

1. Method for loading of a container (20), in particular box body, swap body or roll container, with packages (21), with a guiding device (26) comprising at least one guide (29,30,32), wherein the guiding device (26) is provided with two shiftable hand elements (34,41), preferably shiftable in longitudinal direction of the guide (29,30,32), wherein the hand elements (34,41) are provided with multiple finger elements (35,47), wherein the finger elements (35,47) each are provided with at least two flexible flank elements (2, 3) extending together from one end of the finger element (35, 47) to the opposite end of the finger element (35, 47), wherein the at least two flexible flank elements (2, 3) of the finger elements (35, 47) are each flexibly connected to one another via a plurality of bars (6), such that the finger elements (35, 47) can each be adjusted from at least one curved position into at least one stretched position and back,
- wherein the hand elements (34, 41) take over packages (21) successively,
- wherein the hand elements (34, 41) deposit the overtaken packages (21) into the container (20) successively in the form of a stack (39) of packages (21),
- wherein the hand elements (34, 41) are shifted along the at least one guide (29, 30, 32) at least between the deposition of two successive packages (21),
- wherein the hand elements (34, 41) are adjusted to the left and/or to the right, the hand elements (34, 41) are adjusted to the left and/or to the right depending on the loading space (36), on the height of the stack (39) of packages (21), on the position of the stack (39) of packages (21), on the contour of the stack (39) of packages (21) and/or on the contour of the end face (53) of the stack (39) of packages (21), and
- wherein the hand elements (34, 41) are adjusted upwards and/or downwards, the hand elements (34, 41) are adjusted upwards and/or downwards depending on the loading space (36), on the height of the stack (39) of packages (21), on the position of the stack (39) of packages (21), on the contour of the stack (39) of packages (21) and/or on the contour of the end face (53) of the stack (39) of packages (21).

2. Method according to claim 1,
wherein the hand elements (34, 41) and/or the finger elements (35, 47) are adjusted from a curved position into an extended position and/or back via a drive unit for displacing the at least two flank elements (2, 3) in a longitudinal direction of the finger element (35, 47) with respect to each other, and/or
- wherein at least one hand element (34, 41) and/or at least one finger element (35, 47) with at least one pressure sensor, preferably on at least one flank element (2, 3), is used and, preferably, the at least one pressure sensor detects the pressure on the at least one hand element (34, 41), on at least one finger element (35, 47) and/or on at least one flank element (2, 3) of at least one finger element (35, 47).

3. Method according to claim 1 or 2,
- wherein the packages (21) are taken over by at least one hand element (34, 41) from a conveyor device (33), preferably a belt conveyor device, in particular a telescopic belt conveyor, and/or
- wherein the packages (21) are deposited by at least one hand element (34, 41) at least substantially, preferably successively, in layers (37) on top of each other in the container (20).

4. Method according to any one of claims 1 to 3,
- wherein the loading space (36) of the container (20) to be loaded with packages (21), the position of the stack (39) of packages (21) already deposited by a hand element (34, 41), the contour of the stack (39) of packages (21) already deposited by a hand element (34, 41) and/or the contour of the end face (53) of the stack (39) of packages (21) already deposited by a hand element (34, 41) are at least partially detected by a sensor (50), preferably an optical sensor, in particular a camera, and
- wherein, preferably, the movement of the hand element (34, 41) is controlled at least partially depending on the loading space (36) and/or position of the stack (39) and/or contour of the stack (39) detected by the sensor (50).

5. Method according to any one of claims 1 to 4,
- wherein a hand element (34, 41) is shifted depending on the loading space (36), on the height of the stack (39) of packages (21), on the position of the stack (39) of packages (21), on the contour of the stack (39) of packages (21) and/or on the contour of the end face (53) of the stack (39) of packages (21), preferably along the at least one guide (29, 30, 32), and/or
- wherein a hand element (34, 41) and/or the at least one guide (29, 30, 32) of the guiding device (26) is adjusted forwards and/or backwards and, preferably, the one hand element (34, 41) and/or the at least one guide (29, 30, 32) is adjusted forwards and/or backwards depending on the loading space (36), on the height of the stack (39) of packages (21), on the position of the stack (39) of packages (21), on the contour of the stack (39) of packages (21) and/or on the contour of the end face (53) of the stack (39) of packages (21).

6. Method according to any one of claims 1 to 5,
- wherein the at least one guide (29, 30, 32) of the guiding device (26) is adjusted to the left and/or to the right and, preferably, the at least one guide (29, 30, 32) is adjusted to the left and/or to the right depending on the loading space (36), on the height of the stack (39) of packages (21), on the position of the stack (39) of packages (21), on the contour of the stack (39) of packages (21) and/or on the contour of the end face (53) of the stack (39) of packages (21), and/or
- wherein the at least one guide (29, 30, 32) of the guiding device (26) is adjusted upwards and/or downwards and, preferably, the at least one guide (29, 30, 32) is adjusted upwards (21) and/or downwards depending on the loading space (36), on the height of the stack (39) of packages (21), on the position of the stack (39) of packages (21), on the contour of the stack (39) of packages (21) and/or on the contour of the end face (53) of the stack (39) of packages (21).

7. Method according to any one of claims 1 to 6,
- wherein the at least one guiding device (26), the at least one guide (29, 30, 32) and/or a hand element (34, 41) is moved, preferably stepwise, into the container (20), further into the container (20), further in the direction of a position outside the container (20) and/or out of the container (20), for depositing further packages (21), in particular for depositing at least one further layer (37) of packages (21), and
- wherein, preferably, the at least partial movement into the container (20), the movement towards a position outside the container (20) and/or the movement out of the container (20) depends on the loading space (36), on the height of the stack (39) of packages (21), on the position of the stack (39) of packages (21), on the contour of the stack (39) of packages (21) and/or on the contour of the end face (53) of the stack (39) of packages (21).

8. Method according to any one of claims 1 to 7,
- wherein at least one hand element (41) is connected via a multi-axis arm (42) to the guiding device (26), the at least one guide (30), a further guide (30),
- wherein the at least one hand element (41) held by the multi-axis arm (42) is pivotable about at least two different pivot axes of the multi-axis arm (42), and
- wherein, preferably, at least two pivot axes are arranged at least substantially perpendicular to each other.

9. Method according to claim 8,
- wherein a top layer (37) of packages (21) of the stack (39) of packages (21) is deposited into the container (20) with the at least one hand element (41) held by the multi-axis arm (42), and
- wherein, preferably, the uppermost layer (37) of packages (21) of the stack (39) of packages (21) is arranged below the upper end of the loading space (36) and/or roof (40) of the container (20), preferably adjacent to the upper end of the loading space (36) and/or the roof (40) of the container (20).

10. Method according to claim 8 or 9,
- wherein at least one lower layer (37) of packages (21) of the stack (39) of packages (21) is deposited into the container (20) with at least one lower hand element (34), which is in particular not held by the multi-axis arm (42) on the associated guide (29, 32), and
- wherein at least one upper layer (37) of packages (21) of the stack (39) of packages (21) is deposited into the container (20) with at least one upper hand element (41) held by the multi-axis arm on the associated guide (30).

11. The method according to any one of claims 8 to 10,
- wherein the at least one upper layer (37) of packages (21) of the stack (39) of packages (21) is formed stepwise by the at least one upper hand element (41) and preferably, at least between two steps of forming the at least one upper layer (37) by the upper hand element (41), at least one lower layer (37) of packages (21) of the stack (39) of packages (21) is formed, in particular by the lower hand element (34).

12. Method according to claim 11,
- wherein the stack (39) of packages (21) is formed at least substantially from a plurality of columns (38) of packages (21) of the stack (39) of packages (21) provided adjacent to one another or at least partially overlapping one another, and
- wherein, preferably, at least two columns (38) of packages (21) of the stack (39) of packages (21) are formed successively.

13. The method according to any one of claims 10 to 12,
- wherein a hand element (34, 41) can be shifted at least substantially in the horizontal direction, preferably along the at least one guide (29, 30, 32), and
- wherein the lower hand element (34) and the upper hand element (41) can be held on different guides (29, 30, 32), preferably aligned at least substantially parallel to one another, and can each be shifted, preferably along the respective associated guide (29, 30, 32).

14. Device (27) for loading a container (20), in particular a box body, swap body or roll container, with packages, according to a method of claims 1 to 13, with a guiding device (26) comprising at least one guide (29, 30, 32), wherein two shiftable hand elements (34, 41), preferably shiftable in the longitudinal direction of the guide (29, 30, 32), are provided on the at least one guiding device (26), wherein the hand elements (34,41) are provided with a plurality of finger elements (35, 47), wherein the finger elements (35, 47) each have at least two flexible flank elements (2, 3) extending together from one end of the finger element (35, 47) to the opposite end of the finger element, wherein the at least two flexible flank elements (2, 3) of the finger elements (35, 47) are each flexibly connected to one another via a plurality of bars (6), such that the finger elements (35, 47) can each be adjusted from at least one curved position into at least one stretched position and back.

15. Device according to claim 14,
**characterized in that**
the at least one guide (29, 30, 32) is designed in the form of a rail and the guiding device (26) is designed as a rail assembly comprising the at least one rail.

## Revendications

1. Procédé de chargement d'un récipient (20), notamment d'une superstructure rigide, d'un récipient interchangeable ou d'un récipient sur roulettes, avec des colis (21), comportant au moins un dispositif de guidage (26) comprenant au moins un guidage (29, 30, 32), deux éléments manuels (34, 41) coulissants, de préférence dans le sens longitudinal du guidage (29, 30, 32), étant prévus sur ledit au moins un dispositif de guidage (26), les éléments manuels (34, 41) comportant une multitude d'éléments en forme de doigt (35, 47), les éléments en forme de doigt (35, 47) présentant chacun au moins deux éléments de flanc flexibles (2, 3) s'étendant conjointement d'une extrémité de l'élément en forme de doigt (35, 47) vers l'extrémité opposée de l'élément en forme de doigt (35, 47), les au moins deux éléments de flanc flexibles (2, 3) des éléments en forme de doigt (35, 47) étant chacun reliés entre eux, de manière flexible, par une multitude de traverses (6), de sorte que les éléments en forme de doigt (35, 47) peuvent être ajustés respectivement d'au moins une position courbée à au moins une position allongée et inversement,
- dans lequel les éléments manuels (34, 41) prennent en charge successivement des colis (21),
- dans lequel les éléments manuels (34, 41) déposent successivement les colis (21) pris en charge dans le récipient (20) sous forme d'une pile (39) de colis (21),
- dans lequel les éléments manuels (34, 41) sont déplacés le long d'au moins un guidage (29, 30, 32), au moins entre le dépôt de deux colis successifs (21),
- dans lequel les éléments manuels (34, 41) sont déplacés vers la gauche et/ou vers la droite, les éléments manuels (34, 41) étant déplacés vers la gauche et/ou vers la droite en fonction de l'espace de chargement (36), de la hauteur de la pile (39) de colis (21), de la position de la pile (39) de colis (21), du contour de la pile (39) de colis (21) et/ou du contour de la face frontale (53) de la pile (39) de colis (21) et
- dans lequel les éléments manuels (34, 41) sont déplacés vers le haut et/ou vers le bas, les éléments manuels (34, 41) étant déplacés vers le haut et/ou vers le bas en fonction de l'espace de chargement (36), de la hauteur de la pile (39) de colis (21), de la position de la pile (39) de colis (21), du contour de la pile (39) de colis (21) et/ou du contour de la face frontale (53) de la pile (39) de colis (21).

2. Procédé selon la revendication 1,
dans lequel les éléments manuels (34, 41) et/ou les éléments en forme de doigt (35, 47) sont ajustés les uns par rapport aux autres d'une position courbée à une position allongée et/ou inversement par le biais d'une unité d'entraînement destinée au réglage des au moins deux éléments de flanc (2, 3) dans une direction longitudinale de l'élément en forme de doigt (35, 47) et/ou
- dans lequel on utilise au moins un élément manuel (34, 41) et/ou au moins un élément en forme de doigt (35, 47) avec au moins un capteur de pression, de préférence sur au moins un élément de flanc (2, 3) et, de préférence, ledit au moins un capteur de pression détecte la pression sur au moins un élément manuel (34, 41), sur au moins un élément en forme de doigt (35, 47) et/ou sur au moins un élément de flanc (2, 3) d'au moins un élément en forme de doigt (35, 47).

3. Procédé selon la revendication 1 ou 2,
- dans lequel les colis (21) sont pris en charge par au moins un élément manuel (34, 41) d'un dispositif de convoyage (33), de préférence un convoyeur à courroie, notamment un convoyeur à courroie télescopique, et/ou
- dans lequel les colis (21) sont déposés superposés, au moins essentiellement, de préférence successivement, dans des couches (37) dans le récipient (20) par au moins un élément manuel (34, 41).

4. Procédé selon l'une quelconque des revendications 1 à 3,
- dans lequel l'espace de chargement (36) du récipient (20) à charger avec des colis (21), la position de la pile (39) à partir de colis (21) déjà déposés par un élément manuel (34, 41), le contour de la pile (39) à partir de colis (21) déjà déposés par un élément manuel (34, 41) et/ou le contour de la face frontale (53) de la pile (39) à partir de colis (21) déjà déposés par un élément manuel (34, 41) sont détectés, au moins partiellement, par un capteur (50), de préférence un capteur optique, notamment une caméra, et
- dans lequel, de préférence, le mouvement de l'élément manuel (34, 41) est commandé, au moins partiellement, en fonction de l'espace de chargement (36) et/ou de la position de la pile (39) et/ou du contour de la pile (39) détectés par le capteur (50).

5. Procédé selon l'une quelconque des revendications 1 à 4,
- dans lequel un élément manuel (34, 41) est déplacé, de préférence, le long dudit moins un guidage (29, 30, 32) en fonction de l'espace de chargement (36), de la hauteur de la pile (39) de colis (21), de la position de la pile (39) de colis (21), du contour de la pile (39) de colis (21) et/ou du contour de la face frontale (53) de la pile (39) de colis (21), et/ou
- dans lequel un élément manuel (34, 41) et/ou ledit au moins un guidage (29, 30, 32) du dispositif de guidage (26) est déplacé vers l'avant et/ou vers l'arrière et, de préférence, un élément manuel (34, 41) et/ou ledit au moins un guidage (29, 30, 32) sont déplacés vers l'avant et/ou vers l'arrière en fonction de l'espace de chargement (36), de la hauteur de la pile (39) de colis (21), de la position de la pile (39) de colis (21), du contour de la pile (39) de colis (21) et/ou du contour de la face frontale (53) de la pile (39) de colis (21).

6. Procédé selon l'une quelconque des revendications 1 à 5,
- dans lequel ledit au moins un guidage (29, 30,32) du dispositif de guidage (26) est déplacé vers la gauche et/ou vers la droite et, de préférence, ledit au moins un guidage (29, 30, 32) est déplacé vers la gauche et/ou vers la droite en fonction du compartiment de chargement (36), de la hauteur de la pile (39) de colis (21), de la position de la pile (39) de colis (21), du contour de la pile (39) de colis (21) et/ou du contour de la face frontale (53) de la pile (39) de colis (21) et/ou - dans lequel ledit au moins un guidage (29, 30, 32) du dispositif de guidage (26) est déplacé vers le haut et/ou vers le bas et, de préférence, ledit au moins un guidage (29, 30, 32) est déplacé vers le haut et/ou vers le bas en fonction de l'espace de chargement (36), de la hauteur de la pile (39) de colis (21), de la position de la pile (39) de colis (21), du contour de la pile (39) de colis (21) et/ou du contour de la face frontale (53) de la pile (39) de colis (21).

7. Procédé selon l'une quelconque des revendications 1 à 6,
- dans lequel ledit au moins un dispositif de guidage (26), qui comporte au moins un guidage (29, 30, 32) et/ou un élément manuel (34, 41) pour déposer d'autres colis (21), notamment pour déposer au moins une autre couche (37) de colis (21), est inséré, de préférence progressivement, dans le récipient (20), continue à être inséré dans le récipient (20), continue à être déplacé en direction d'une position en dehors du récipient (20) et/ou est évacué hors du récipient (20) et
- dans lequel, de préférence, l'introduction, au moins partiellement, dans le récipient (20), le déplacement vers une position en dehors du récipient (20) et/ou le retrait du récipient (20) s'effectue en fonction de l'espace de chargement (36), de la hauteur de la pile (39) de colis (21), de la position de la pile (39) de colis (21), du contour de la pile (39) de colis (21) et/ou du contour de la face frontale (53) de la pile (39) de colis (21).

8. Procédé selon l'une quelconque des revendications 1 à 7,
- dans lequel au moins un élément manuel (41) est relié par un bras multiaxial (42) au dispositif de guidage (26), audit au moins un guidage (30), à un autre guidage (30),
- dans lequel ledit au moins un élément de manuel (41) maintenu par le bras multiaxial (42) peut pivoter autour d'au moins deux axes de pivotement différents du bras multiaxial (42) et
- dans lequel, de préférence, au moins deux axes de pivotement sont agencés au moins sensiblement à angle droit entre eux.

9. Procédé selon la revendication 8,
- dans lequel une couche supérieure (37) de colis (21) de la pile (39) de colis (21) est déposée dans le récipient (20) avec l'au moins un élément manuel (41) maintenu par le bras multiaxial (42) et
- dans lequel, de préférence, la couche supérieure (37) de colis (21) de la pile (39) de colis (21) est agencée en dessous de l'extrémité supérieure l'espace de chargement (36) et/ou du toit (40) du récipient (20), de préférence adjacente à l'extrémité supérieure de l'espace de chargement (36) et/ou du toit (40) du récipient (20).

10. Procédé selon la revendication 8 ou 9,
- dans lequel au moins une couche inférieure (37) de colis (21) de la pile (39) de colis (21) est déposée dans le récipient (20) avec au moins un élément manuel inférieur (34) maintenu, notamment pas par un bras multiaxial (42), sur le guidage associé (29, 32) et
- dans lequel au moins une couche supérieure (37) de colis (21) de la pile (39) de colis (21) est déposée dans le récipient (20) avec au moins un élément manuel supérieur (41) maintenu sur le guidage correspondant (30) par l'intermédiaire d'un bras multiaxial (42).

11. Procédé selon l'une quelconque des revendications 8 à 10,
- dans lequel ladite au moins une couche supérieure (37) de colis (21) de la pile (39) de colis (21) est formée progressivement par ledit au moins un élément manuel supérieur (41) et, de préférence, au moins une couche inférieure (37) de colis (21) de la pile (39) de colis (21), est formée, notamment par l'élément manuel inférieur (34), au moins entre deux étapes de formation de ladite au moins une couche supérieure (37) par l'élément manuel supérieur (41).

12. Procédé selon la revendication 11,
- dans lequel la pile (39) de colis (21) est formée au moins essentiellement de plusieurs colonnes (38) de colis (21) de la pile (39) de colis (21) prévues adjacentes l'une à l'autre ou se chevauchant au moins partiellement et
- dans lequel, de préférence, au moins deux colonnes (38) de colis (21) de la pile (39) de colis (21) sont formées l'une après l'autre.

13. Procédé selon l'une quelconque des revendications 10 à 12,
- dans lequel un élément manuel (34, 41) peut être déplacé au moins essentiellement dans le sens horizontal, de préférence le long dudit au moins un guidage (29, 30, 32), et
- dans lequel l'élément manuel inférieur (34) et l'élément manuel supérieur (41) peuvent être maintenus sur différents guidages (29, 30, 32), orientés de préférence au moins essentiellement parallèlement entre eux et pouvant être respectivement déplacés, de préférence, le long du guidage correspondant (29, 30, 32).

14. Dispositif (27) de chargement d'un récipient (20), notamment d'une superstructure rigide, d'un récipient interchangeable ou d'un récipient sur roulettes, avec des colis, conformément au procédé selon les revendication 1 à 13, comportant au moins un dispositif de guidage (26) comprenant au moins un guidage (29, 30, 32), deux éléments manuels (34, 41) coulissants, de préférence dans le sens longitudinal du guidage (29, 30, 32), étant prévus sur ledit au moins un dispositif de guidage (26), les éléments manuels (34, 41) comportant une multitude d'éléments en forme de doigt (35, 47), les éléments en forme de doigt (35, 47) présentant chacun au moins deux éléments de flanc flexibles (2, 3) s'étendant conjointement d'une extrémité de l'élément en forme de doigt (35, 47) vers l'extrémité opposée de l'élément en forme de doigt, les au moins deux éléments de flanc flexibles (2, 3) des éléments en forme de doigt (35, 47) étant chacun reliés entre eux, de manière flexible, par une multitude de traverses (6), de sorte que les éléments en forme de doigt (35, 47) peuvent être ajustés respectivement d'au moins une position courbée à au moins une position allongée et inversement.

15. Dispositif selon la revendication 14,
**caractérisée en ce que**
ledit au moins un guidage (29, 30, 32) étant conçu sous forme de rail, et le dispositif de guidage (26) étant conçu sous forme d'un dispositif à rail comprenant au moins un rail.
